(19) **Europäisches Patentamt / European Patent Office / Office européen des brevets**

(11) **EP 4 604 415 A1**

(12) **EUROPEAN PATENT APPLICATION**
published in accordance with Art. 153(4) EPC

(43) Date of publication:
**20.08.2025 Bulletin 2025/34**

(21) Application number: **23877713.0**

(22) Date of filing: **12.10.2023**

(51) International Patent Classification (IPC):
*H04B 7/155* (2006.01)   *H04B 7/06* (2006.01)
*H04B 7/08* (2006.01)   *H04W 72/231* (2023.01)
*H04W 72/232* (2023.01)   *H04W 72/04* (2023.01)
*H04W 72/0457* (2023.01)   *H04W 84/04* (2009.01)

(52) Cooperative Patent Classification (CPC):
**H04B 7/06; H04B 7/08; H04B 7/155; H04W 72/04; H04W 72/0457; H04W 72/231; H04W 72/232; H04W 84/04**

(86) International application number:
**PCT/KR2023/015756**

(87) International publication number:
**WO 2024/080790 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.10.2022  KR 20220130938**
**16.02.2023  KR 20230021041**

(71) Applicant: **LG Electronics Inc.**
**Yeongdeungpo-gu**
**Seoul 07336 (KR)**

(72) Inventors:
• **SHIM, Jaenam**
 **Seoul 06772 (KR)**
• **YOU, Hyangsun**
 **Seoul 06772 (KR)**
• **KO, Hyunsoo**
 **Seoul 06772 (KR)**
• **BAN, Choongsang**
 **Seoul 06772 (KR)**

(74) Representative: **Plasseraud IP**
**104 Rue de Richelieu**
**CS92104**
**75080 Paris Cedex 02 (FR)**

(54) **SIGNAL TRANSMISSION/RECEPTION METHOD FOR WIRELESS COMMUNICATION, AND APPARATUS THEREFOR**

(57) A terminal in a wireless communication system, according to various embodiments, receives information about a first operation period for downlink reception through a backhaul link, sets a first beam of the backhaul link with respect to the first operation period, and uses the first beam of the backhaul link so as to receive, from a base station, a downlink signal to be forwarded to the terminal, and, on the basis of overlapping of a second operation period for reception of the downlink signal through a control ink and the first operation period on at least one time resource, the first beam of the backhaul link is configured to be the same as a second beam of the control link with respect to the at least one time resource, and the second operation period can include a first time resource allocated through downlink control information and a second time resource set for monitoring of the downlink signal.

FIG. 8

Network-controlled repeater(NCR)

Control link — NCR-MT(Mobile terminal)

Forwarding link for backhaul(FLB) — Internal interface — Forwarding link for sevice(FLS)

NCR-RU(Radio Unit)

gNB   UE

Description

## TECHNICAL FIELD

The present disclosure relates to wireless communication, and more particularly, to a method of transmitting or receiving an uplink/downlink signal in a wireless communication system and apparatus therefor.

## BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

## DISCLOSURE

## TECHNICAL PROBLEM

The object of the present disclosure is to provide a method of transmitting and receiving signals more accurately and efficiently.

The objects of present disclosure are not limited to what has been particularly described hereinabove, and other objects that the present disclosure could achieve will be more clearly understood from the following detailed description.

## TECHNICAL SOLUTION

In an aspect of the present disclosure, provided herein is a method of performing communication by a device having a control link and a backhaul link formed with a base station (BS) in a wireless communication system. The method includes: receiving information on a first operation duration for the backhaul link; configuring a first beam of the backhaul link for the first operation duration; and receiving a downlink signal to be forwarded to a user equipment (UE) from the BS based on the first beam of the backhaul link. Based on that a second operation duration for receiving the downlink signal through the control link overlaps with the first operation duration on at least one time resource, the first beam of the backhaul link may be set to a same beam as a second beam of the control link for the at least one time resource. The second operation duration may include a first time resource allocated through downlink control information and a second time resource configured to monitor the downlink signal.

Alternatively, the second time resource may include time resources configured to monitor at least one of a synchronization signal block (SSB), system information block1 (SIB1), a channel state information reference signal (CSI-RS), and a physical downlink control channel (PDCCH), which are related to the control link.

Alternatively, the method may further include receiving indication information indicating a beam for the backhaul link.

Alternatively, even based on reception of the indication information, the first beam of the backhaul link may be set to the same beam as the second beam for the at least one time resource.

Alternatively, the first beam of the backhaul link may be set to a beam indicated by the indication information for remaining time resources except for the at least one time resource among time resources included in the first operation duration.

Alternatively, the first beam of the backhaul link may be set to a beam indicated by the indication information only for time resources earlier than the at least one time resource among the remaining time resources.

Alternatively, based on that indication information indicating a beam for the backhaul link is not received, the first beam of the backhaul link may be set to a beam determined based on a predefined rule for remaining time resources except for the at least one time resource among time resources included in the first operation duration.

Alternatively, the first beam of the backhaul link may be set to a beam corresponding to a control resource set (CORESET) with a lowest index among CORESETs related to the control link, based on the predefined rule.

Alternatively, the method may further include forwarding the downlink signal to the UE through an access link formed with the UE.

In another aspect of the present disclosure, provided herein is a device configured to perform communication based on a control link and a backhaul link formed with a BS in a wireless communication system. The device may include: a radio frequency (RF) transceiver; and a processor configured to control the RF transceiver. The processor is configured to: control the RF transceiver to receive information on a first operation duration for downlink reception through the backhaul link; configure a first beam of the backhaul link for the first operation duration; and receive a downlink signal to be forwarded to a UE from the BS based on the first beam of the backhaul link. Based on that a second operation duration for receiving the downlink signal through the control link overlaps with the first operation duration on at least one time resource, the first beam of the backhaul link may be set to a same beam as a second beam of the control link for the at least one time resource. The second operation duration may include a first time resource allocated through downlink control information and a second time resource configured to monitor the downlink signal.

In another aspect of the present disclosure, provided herein is a processing device configured to control a device having a control link and a backhaul link formed with a BS in a wireless communication system. The processing device includes: at least one processor; and at least one memory connected to the at least one processor and storing instructions that, based on execution by the at least one processor, cause a UE to: receive information on a first operation duration for downlink reception through the backhaul link; configure a first beam of the backhaul link for the first operation duration; and receive a downlink signal to be forwarded to a UE from the BS based on the first beam of the backhaul link. Based on that a second operation duration for receiving the downlink signal through the control link overlaps with the first operation duration on at least one time resource, the first beam of the backhaul link may be set to a same beam as a second beam of the control link for the at least one time resource. The second operation duration may include a first time resource allocated through downlink control information and a second time resource configured to monitor the downlink signal.

In a further aspect of the present disclosure, provided herein is a method of performing communication by a BS having a control link and a backhaul link formed with a device in a wireless communication system. The method includes: transmitting information on a first operation duration for downlink reception through the backhaul link; determining a third beam for transmitting a downlink signal through the backhaul link; and transmitting the downlink signal to be forwarded to a UE to the device based on the third beam of the backhaul link during the first operation duration. Based on that a second operation duration for receiving the downlink signal through the control link overlaps with the first operation duration on at least one time resource, the third beam of the backhaul link may be determined to be a same beam as a transmission beam of the control link for the at least one time resource. The second operation duration may include a first time resource allocated through downlink control information and a second time resource configured to monitor the downlink signal.

## ADVANTAGEOUS EFFECTS

According to an embodiment of the present disclosure, signal transmission and reception can be performed more accurately and efficiently in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

## BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.

FIG. 1 illustrates the structure of an LTE system to which embodiment(s) are applicable.
FIG. 2 illustrates the structure of an NR system to which embodiment(s) are applicable.
FIG. 3 illustrates the structure of an NR radio frame to which embodiment(s) are applicable.
FIG. 4 illustrates the slot structure of an NR frame to which embodiment(s) are applicable.
FIG. 5 illustrates an example of mapping physical channels in a slot.
FIG. 6 illustrates an exemplary PDCCH transmission/reception process.
FIG. 7 schematically illustrates an example of a parent link and a child link.
FIG. 8 is a diagram illustrating an example of topology in which a network-controlled repeater (NCR) performs transmission and reception between the gNB and the UE.
FIG. 9 is a diagram illustrating a radio frequency (RF) repeater and an NCR.

FIG. 10 is a diagram for explaining a method for configuring a beam of a backhaul link based on whether a backhaul link beam indication and a simultaneous operation are performed.

FIG. 11 is a diagram for explaining a method of configuring a beam of a backhaul link by a device having a control link and a backhaul link formed with a BS.

FIG. 12 is a diagram for explaining a method of configuring a beam of a backhaul link by a BS having a control link and a backhaul link with a device.

FIG. 13 illustrates a communication system applied to the present disclosure.

FIG. 14 illustrates wireless devices applicable to the present disclosure.

FIG. 15 illustrates another example of a wireless device to which the present disclosure is applied.

## DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

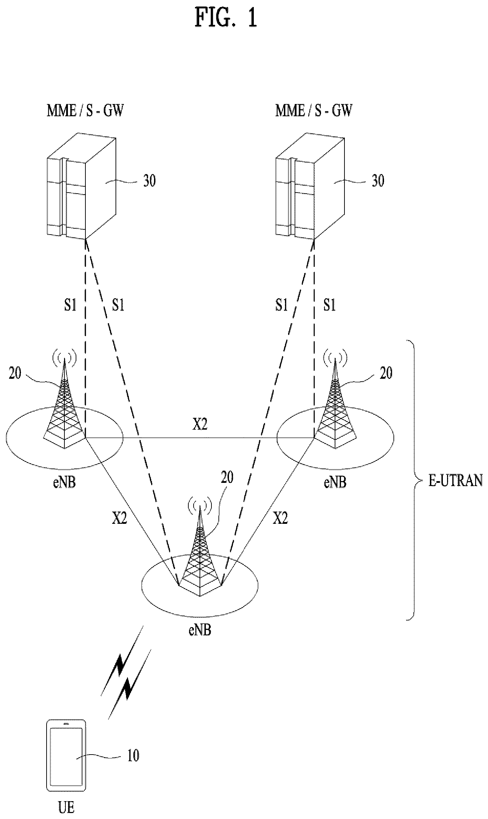

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user UE (UT), subscriber station (SS), mobile UE (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

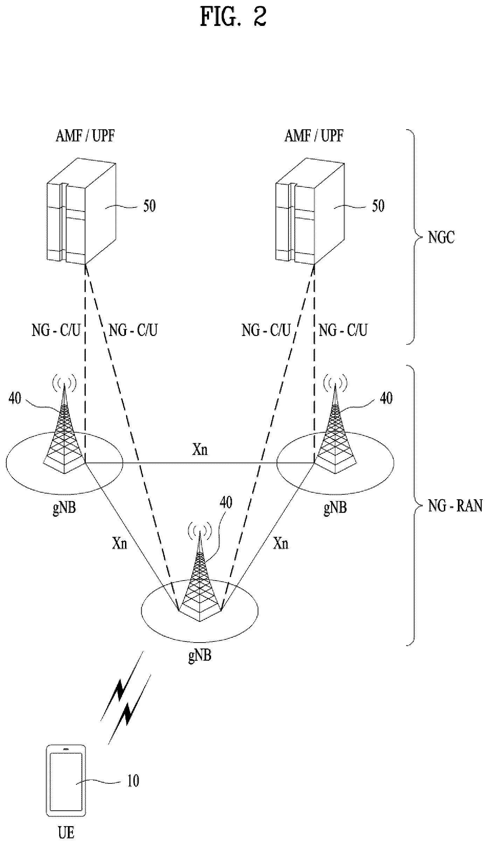

FIG. 2 illustrates the structure of a NR system to which the present disclosure is applicable.

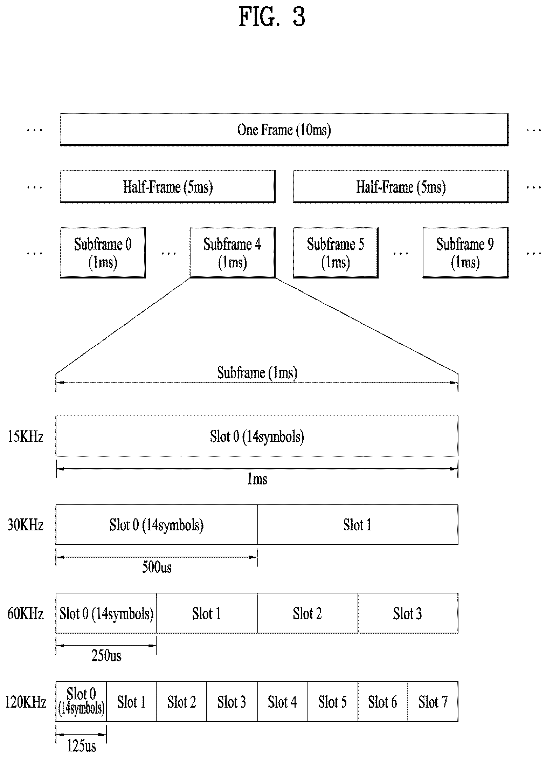

Referring to FIG. 2, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

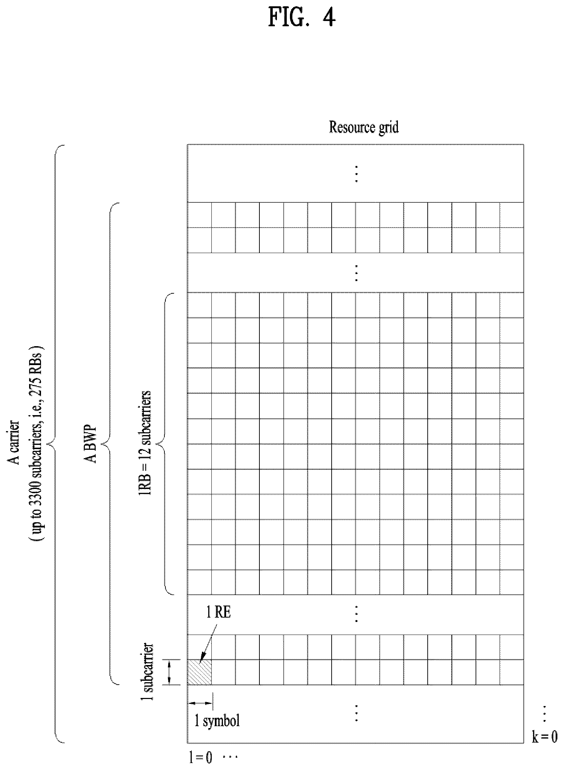

FIG. 4 illustrates the slot structure of a NR frame to which the present disclosure is applicable.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

## Bandwidth part (BWP)

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, mMTC, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signalling, etc.). The BS may instruct the UE to switch to another configured DL/UL BWP (through L1 signaling, MAC CE or RRC signalling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. A DL/UL BWP assumed by the UE in this situation is defined as an initial active DL/UL BWP.

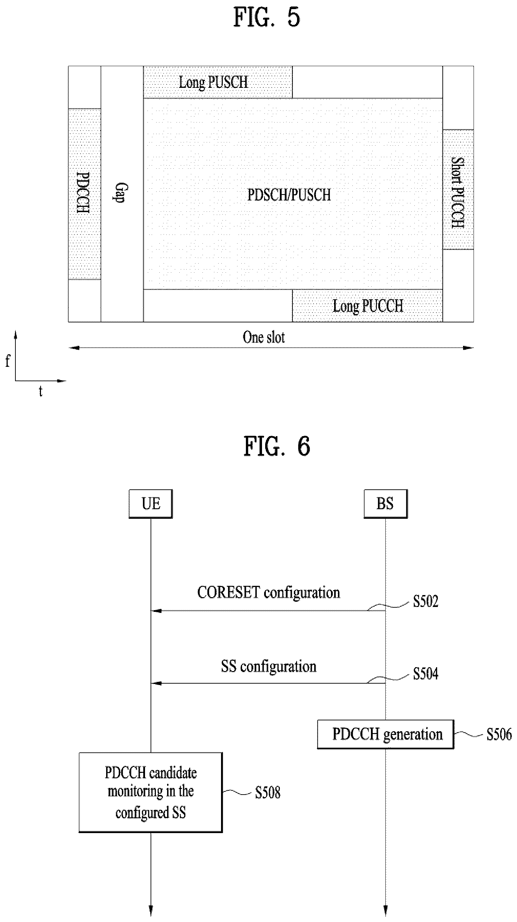

FIG. 5 illustrates an example of mapping physical channels in a slot.

A slot may include a DL control channel, DL or UL data, a UL control channel, etc., all of which are included. For example, the first N symbols in a slot may be used to transmit a DL control channel (hereinafter, referred to as a DL control region), and the last M symbols in the slot may be used to transmit a UL control channel (hereinafter, referred to as a UL control region). N and M are each integers greater than or equal to 0. A resource region (hereinafter, referred to as a data region) between the DL control region and the UL control region may be used for DL data transmission or UL data transmission. A time gap for DL-to-UL or UL-to-DL switching may exist between the control region and the data region. A PDCCH may be transmitted in the DL control region, and a PDSCH may be transmitted in the DL data region. Some symbols at the time of switching from DL to UL in a slot may be used as a time gap.

In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 6 illustrates an exemplary PDCCH transmission/reception process.

Referring to FIG. 6, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. System information (SIB1) broadcast in a cell includes cell-specific PDSCH configuration information, PDSCH-ConfigCommon. PDSCH-ConfigCommon includes a list (or look-up table) of parameters related to a time-domain resource allocation, pdsch-TimeDomainAllocationList. Each pdsch-TimeDomainAllocationList may include up to 16 entries (or rows) each being joint-encoded {K0, PDSCH mapping type, PDSCH start symbol and length (SLIV)}. Aside from (additionally to) pdsch-TimeDomainAllocationList configured through PDSCH-ConfigCommon, pdsch-TimeDomainAllocationList may be provided through a UE-specific PDSCH configuration, PDSCH-Config. pdsch-TimeDomainAllocationList configured UE-specifically has the same structure as pdsch-TimeDomainAllocationList provided UE-commonly. For K0 and an SLIV of pdsch-TimeDomainAllocationList, the following description is referred to.

Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/fields.

- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.
The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS."
A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: Indicates the ID of an SS.
- controlResourceSetId: Indicates a CORESET associated with the SS.
- monitoringSlotPeriodicity AndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.
Table 5 shows the characteristics of each SS.

[Table 5]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |

(continued)

| Type | Search Space | RNTI | Use Case |
|---|---|---|---|
| UE Specific | UE Specific | C-RNTI, or MCS-C-RNTI, or CS-RNTI(s) | User specific PDSCH decoding |

Table 6 shows DCI formats transmitted on the PDCCH.

[Table 6]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.

- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

### RRC signaling for cell-specific signal or channel

Hereinafter, parameters for RRC signaling for a cell-specific signal or channel will be described in detail (refer to 3GPP TS 38.331).

First, *TDD-UL-DL-ConfigCommon* may be configuration information that determines/configures a cell-specific UL/DL TDD configuration. *TDD-UL-DL-ConfigCommon* may include parameters defined in Table 7.

[Table 7]

| **TDD-UL-DL-ConfigCommon field descriptions** |
| --- |
| **referenceSubcarrierSpacing**<br>Reference SCS used to determine the time domain boundaries in the UL-DL pattern which must be common across all subcarrier specific carriers, i.e., independent of the actual subcarrier spacing using for data transmission. Only the values 15, 30 or 60 kHz (FR1), and 60 or 120 kHz (FR2) are applicable. The network configures a not larger than any SCS of configured BWPs for the serving cell. The network or SL-*PreconfigGeneral* configures a not larger than the SCS of (pre-)configured SL BWP.See TS 38.213 [13], clause 11.1. |
| **TDD-UL-DL-Pattern field descriptions** |
| **dl-UL-TransmissionPeriodicity**<br>Periodicity of the DL-UL pattern, see TS 38.213 [13], clause 11.1. If the *dl-UL-TransmissionPeriodicity-v1530* is signalled, UE shall ignore the *dl-UL-TransmissionPeriodicity* (without suffix). |
| **nrofDownlinkSlots**<br>Number of consecutive full DL slots at the beginning of each DL-UL pattern, see TS 38.213 [13], clause 11.1. In this release, the maximum value for this field is 80. |
| **nrofDownlinkSymbols**<br>Number of consecutive DL symbols in the beginning of the slot following the last full DL slot (as derived from *nrofDownlinkSlots*). The value 0 indicates that there is no partial-downlink slot. (see TS 38.213 [13], clause 11.1). |
| **nrofUplinkSlots**<br>Number of consecutive full UL slots at the end of each DL-UL pattern, see TS 38.213 [13], clause 11.1. In this release, the maximum value for this field is 80. |
| **nrofUplinkSymbols**<br>Number of consecutive UL symbols in the end of the slot preceding the first full UL slot (as derived from *nrofUplinkSlots*). The value 0 indicates that there is no partial-uplink slot. (see TS 38.213 [13], clause 11.1). |

Next, *BWP-DownlinkCommon*n is configuration information used to configure the common parameters of a DL BWP. In other words, *BWP-DownlinkCommon* may include "cell-specific" parameters. The common parameters for the initial BWP of a PCell may also be provided through system information. For all other serving cells, the network may provide common parameters through dedicated signaling. Specifically, *BWP-DownlinkCommon* may include parameters defined in Table 8.

[Table 8]

| **BWP-DownlinkCommon field descriptions** |
| --- |
| **pdcch-ConfigCommon**<br>Cell specific parameters for the PDCCH of this BWP. This field is absent for a dormant BWP. |
| **pdsch-ConfigCommon**<br>Cell specific parameters for the PDSCH of this BWP . |

Among the above-described parameters, *PDCCH-ConfigCommon* may be used to configure cell-specific PDCCH parameters provided not only in an SIB but also through dedicated signaling. Referring to Table 9, *PDCCH-ConfigCommon* may include parameters for configuring a cell-specific PDCCH.

[Table 9]

| **PDCCH-ConfigCommon field descriptions** |
| --- |
| **commonControlResourceSet**<br>An additional common control resource set which may be configured and used for any common or UE-specific search space. If the network configures this field, it uses a *ControlResourceSetId* other than 0 for this *ControlResourceSet*. The network configures the *commonControlResourceSet* in *SIB1* so that it is contained in the bandwidth of CORESET#0. |
| **commonSearchSpaceList, commonSearchSpaceListExt** |

(continued)

| **PDCCH-ConfigCommon field descriptions** |
|---|
| A list of additional common search spaces. If the network configures this field, it uses the *SearchSpaceIds* other than 0. If the field is included, it replaces any previous list, i.e. all the entries of the list are replaced and each of the *SearchSpace* entries is considered to be newly created and the conditions and Need codes for setup of the entry apply. If the network includes *commonSearchSpaceListExt,* it includes the same number of entries, and listed in the same order, as in *commonSearchSpaceList.* |
| **controlResourceSetZero**<br>Parameters of the common CORESET#0 which can be used in any common or UE-specific search spaces. The values are interpreted like the corresponding bits in *MIB pdcch-ConfigSIB1.* Even though this field is only configured in the initial BWP (BWP#0) *controlResourceSetZero* can be used in search spaces configured in other DL BWP(s) than the initial DL BWP if the conditions defined in TS 38.213 [13], clause 10 are satisfied. |
| **firstPDCCH-MonitoringOccasionOfPO**<br>Indicates the first PDCCH monitoring occasion of each PO of the PF on this BWP, see TS 38.304 [20]. |
| **pagingSearchSpace**<br>ID of the Search space for paging (see TS 38.213 [13], clause 10.1). If the field is absent, the UE does not receive paging in this BWP (see TS 38.213 [13], clause 10). |
| **ra-SearchSpace**<br>ID of the Search space for random access procedure (see TS 38.213 [13], clause 10.1). If the field is absent, the UE does not receive RAR in this BWP. This field is mandatory present in the DL BWP(s) if the conditions described in TS 38.321 [3], clause 5.15 are met. |
| **searchSpaceOtherSystemInformation**<br>ID of the Search space for other system information, i.e., *SIB2* and beyond (see TS 38.213 [13], clause 10.1). If the field is absent, the UE does not receive other system information in this BWP. |
| **searchSpaceSIB1**<br>ID of the search space for *SIB1* message. In the initial DL BWP of the UE's PCell, the network sets this field to 0. If the field is absent, the UE does not receive *SIB1* in this BWP. (see TS 38.213[13], clause 10) |
| **searchSpaceZero**<br>Parameters of the common SearchSpace#0. The values are interpreted like the corresponding bits in *MIB pdcch-ConfigSIB1.* Even though this field is only configured in the initial BWP (BWP#0), *searchSpaceZero* can be used in search spaces configured in other DL BWP(s) than the initial DL BWP if the conditions described in TS 38.213 [13], clause 10, are satisfied. |

According to Table 10, *PDSCH-ConfigCommon* is configuration information used to configure a cell-specific PDSCH.

[Table 10]

```
PDSCH-ConfigCommon information element
-- ASN1START
-- TAG-PDSCH-CONFIGCOMMON-START

PDSCH-ConfigCommon ::=                   SEQUENCE {
    pdsch-TimeDomainAllocationList             PDSCH-TimeDomainResourceAllocationList
OPTIONAL,   -- Need R
    ...
}
-- TAG-PDSCH-CONFIGCOMMON-STOP
-- ASN1STOP
```

| PDSCH-ConfigCommon field descriptions |
|---|
| pdsch-TimeDomainAllocationList<br>List of time-domain configurations for timing of DL assignment to DL data (see table 5.1.2.1.1-1 in TS 38.214 [19]). |

According to Table 11, *IE ServingCellConfigCommon* may be used to configure the cell-specific parameters for the serving cell of the UE. *ServingCellConfigCommon* may include parameters that the UE typically acquires from an SSB, MIB, or SIB when accessing the cell from the IDLE state.

[Table 11]

| ***ServingCellConfigCommon* field descriptions** |
|---|
| ***channelAccessMode***<br>If present, this field indicates which channel access procedures to apply for operation with shared spectrum channel access as defined in TS 37.213 [48]. If the field is configured as "semiStatic", the UE shall apply the channel access procedures for semi-static channel occupancy as described in clause 4.3 in TS 37.213. If the field is configured as "dynamic", the UE shall apply the channel access procedures in TS 37.213, with the exception of clause 4.3 of TS 37.213. |
| ***dmrs-TypeA-Position***<br>Position of (first) DM-RS for downlink (see TS 38.211 [16], clause 7.4.1.1.1) and uplink (TS 38.211 [16], clause 6.4.1.1.3). |
| ***downlinkConfigCommon***<br>The common downlink configuration of the serving cell, including the frequency information configuration and the initial downlink BWP common configuration. The parameters provided herein should match the parameters configured by MIB and SIB1 (if provided) of the serving cell, with the exception of *controlResourceSetZero* and *searchSpaceZero* which can be configured in *ServingCellConfigCommon* even if MIB indicates that they are absent. |
| ***discoveryBurstWindowLength***<br>Indicates the window length of the discovery burst in ms (see TS 37.213 [48]). |
| ***longBitmap***<br>Bitmap when maximum number of SS/PBCH blocks per half frame equals to 64 as defined in TS 38.213 [13], clause 4.1. |
| ***lte-CRS-ToMatchAround***<br>Parameters to determine an LTE CRS pattern that the UE shall rate match around. |
| ***mediumBitmap***<br>Bitmap when maximum number of SS/PBCH blocks per half frame equals to 8 as defined in TS 38.213 [13], clause 4.1. |
| ***n-TimingAdvanceOffset***<br>The N_TA-Offset to be applied for all uplink transmissions on this serving cell. If the field is absent, the UE applies the value defined for the duplex mode and frequency range of this serving cell. See TS 38.133 [14], table 7.1.2-2. |
| ***rateMatchPatternToAddModList*** |

(continued)

| ***ServingCellConfigCommon* field descriptions** |
|---|
| Resources patterns which the UE should rate match PDSCH around. The UE rate matches around the union of all resources indicated in the rate match patterns. Rate match patterns defined here on cell level apply only to PDSCH of the same numerology (see TS 38.214 [19], clause 5.1.4,1). |
| ***shortBitmap***<br>Bitmap when maximum number of SS/PBCH blocks per half frame equals to 4 as defined in TS 38.213 [13], clause 4.1. |
| ***ss-PBCH-BlockPower***<br>Average EPRE of the resources elements that carry secondary synchronization signals in dBm that the NW used for SSB transmission, see TS 38.213 [13], clause 7. |
| ***ssb-periodicityServingCell***<br>The SSB periodicity in ms for the rate matching purpose. If the field is absent, the UE applies the value ms5. (see TS 38.213 [13], clause 4.1) |
| ***ssb-PositionQCL***<br>Indicates the QCL relation between SSB positions for this serving cell as specified in TS 38.213 [13], clause 4.1. |
| ***ssb-PositionsinBurst***<br>For operation in licensed spectrum, indicates the time domain positions of the transmitted SS-blocks in a half frame with SS/PBCH blocks as defined in TS 38.213 [13], clause 4.1. The first/leftmost bit corresponds to SS/PBCH block index 0, the second bit corresponds to SS/PBCH block index 1, and so on. Value 0 in the bitmap indicates that the corresponding SS/PBCH block is not transmitted while value 1 indicates that the corresponding SS/PBCH block is transmitted. The network configures the same pattern in this field as in the corresponding field in ServingCellConfigCommonSIB.<br><br>For operation with shared spectrum channel access, only *mediumBitmap* is used and the UE assumes that one or more SS/PBCH blocks indicated by *ssb-PositionsInBurst* may be transmitted within the discovery burst transmission window and have candidate SS/PBCH blocks indexes corresponding to SS/PBCH block indexes provided by *ssb-PositionsInBurst* (see TS 38.213 [13], clause 4.1). If the k-th bit of *ssb-PositionsInBurst* is set to 1, the UE assumes that one or more SS/PBCH blocks within the discovery burst transmission window with candidate SS/PBCH block indexes corresponding to SS/PBCH block index equal to k - 1 may be transmitted; if the kt-th bit is set to 0, the UE assumes that the corresponding SS/PBCH block(s) are not transmitted. The k-th bit is set to 0, where k > *ssb-PositionQCL* and the number of actually transmitted SS/PBCH blocks is not larger than the number of 1's in the bitmap. The network configures the same pattern in this field as in the corresponding field in *ServingCellConfigCommonSIB.* |
| ***ssbSubcarrierSpacing***<br>Subcarrier spacing of SSB. Only the values 15 kHz or 30 kHz (FR1), and 120 kHz or 240 kHz (FR2) are applicable. |
| ***supplementaryUplinkConfig***<br>The network configures this field only if *uplinkConfigCommon* is configured. If this field is absent, the UE shall release the *supplementaryUplinkConfig* and the *supplementaryUplink* configured in *ServingCellConfig* of this serving cell, if configured. |
| ***tdd-UL-DL-ConfigurationCommon***<br>A cell-specific TDD UL/DL configuration, see TS 38.213 [13], clause 11.1. |

According to Table 12, *ServingCellConfigCommonSIB* may be used to configure the cell-specific parameters of the serving cell of the UE in SIB1.

[Table 12]

| ***ServingCellConfigCommonSIB* field descriptions** |
|---|
| ***channelAccessMode*** |

(continued)

| ***ServingCellConfigCommonSIB* field descriptions** |
| --- |
| If present, this field indicates which channel access procedures to apply for operation with shared spectrum channel access as defined in TS 37.213 [48]. If the field is configured as "semiStatic", the UE shall apply the channel access procedures for semi-static channel occupancy as described in clause 4.3 in TS 37.213. If the field is configured as "dynamic", the UE shall apply the channel access procedures in TS 37.213, with the exception of clause 4.3 of TS 37.213. |
| ***discoveryBurstWindowLength***<br>Indicates the window length of the discovery burst in ms (see TS 37.213 [48]). |
| ***groupPresence***<br>This field is present when maximum number of SS/PBCH blocks per half frame equals to 64 as defined in TS 38.213 [13], clause 4.1. The first/leftmost bit corresponds to the SS/PBCH index 0-7, the second bit corresponds to SS/PBCH block 8-15, and so on. Value 0 in the bitmap indicates that the SSBs according to *inOneGroup* are absent. Value 1 indicates that the SS/PBCH blocks are transmitted in accordance with *inOneGroup.* |
| ***inOneGroup***<br>When maximum number of SS/PBCH blocks per half frame equals to 4 as defined in TS 38.213 [13], clause 4.1, only the 4 leftmost bits are valid; the UE ignores the 4 rightmost bits. When maximum number of SS/PBCH blocks per half frame equals to 8 as defined in TS 38.213 [13], clause 4.1, all 8 bits are valid. The first/ leftmost bit corresponds to SS/PBCH block index 0, the second bit corresponds to SS/PBCH block index 1, and so on. When maximum number of SS/PBCH blocks per half frame equals to 64 as defined in TS 38.213 [13], clause 4.1, all 8 bit are valid; The first/ leftmost bit corresponds to the first SS/PBCH block index in the group (i.e., to SSB index 0, 8, and so on); the second bit corresponds to the second SS/PBCH block index in the group (i.e., to SSB index 1, 9, and so on), and so on. Value 0 in the bitmap indicates that the corresponding SS/PBCH block is not transmitted while value 1 indicates that the corresponding SS/PBCH block is transmitted. |
| ***n-TimingAdvanceOffset***<br>The N_TA-Offset to be applied for random access on this serving cell. If the field is absent, the UE applies the value defined for the duplex mode and frequency range of this serving cell. See TS 38.133 [14], table 7.1.2-2. |
| ***ssb-PositionsinBurst***<br>Time domain positions of the transmitted SS-blocks in an SS-burst as defined in TS 38.213 [13], clause 4.1. For operation with shared spectrum channel access, only *inOneGroup* is used and the UE interprets this field same as *mediumBitmap* in *ServingCellConfigCommon.* The UE assumes that a bit at position $k > N_{SSB}^{QCL}$ is 0, where $N_{ccR}^{QCL}$ is obtained from *MIB* as specified in TS 38.213 [13], clause 4.1. |
| ***ss-PBCH-BlockPower***<br>Average EPRE of the resources elements that carry secondary synchronization signals in dBm that the NW used for SSB transmission, see TS 38.213 [13], clause 7. |

According to Table 13, *BWP-UplinkCommon* may be used to configure the common parameters of an uplink BWP. *BWP-UplinkCommon* may also configure parameters for cell-specific signals.

[Table 13]

| ***BWP-UplinkCommon* field descriptions** |
| --- |
| ***msgA-ConfigCommon***<br>Configuration of the cell specific PRACH and PUSCH resource parameters for transmission of MsgA in 2-step random access type procedure. The NW can configure *msgA-ConfigCommon* only for UL BWPs if the linked DL BWPs (same bwp-Id as UL-BWP) are the initial DL BWPs or DL BWPs containing the SSB associated to the initial BL BWP |
| ***pucch-ConfigCommon***<br>Cell specific parameters for the PUCCH of this BWP. |
| ***pusch-ConfigCommon***<br>Cell specific parameters for the PUSCH of this BWP. |

(continued)

| **BWP-UplinkCommon field descriptions** |
|---|
| **rach-ConfigCommon** |
| Configuration of cell specific random access parameters which the UE uses for contention based and contention free random access as well as for contention based beam failure recovery in this BWP. The NW configures SSB-based RA (and hence *RACH-ConfigCommon*) only for UL BWPs if the linked DL BWPs (same *bwp-Id* as UL-BWP) are the initial DL BWPs or DL BWPs containing the SSB associated to the initial DL BWP. The network configures *rach-ConfigCommon,* whenever it configures contention free random access (for reconfiguration with sync or for beam failure recovery). |
| **rach-ConfigCommonIAB** |
| Configuration of cell specific random access parameters for the IAB-MT. The IAB specific IAB RACH configuration is used bv IAB-MT, if configured. |
| **useInterfacePUCCH-PUSCH** |
| If the field is present, the UE uses uplink frequency domain resource allocation Type 2 for cell-specific PUSCH, e.g., PUSCH scheduled by RAR UL grant (see TS 38.213 [13], clause 8.3 and TS 38.214 [19], clause 6.1.2.2) and uses interlaced PUCCH Format 0 and 1 for cell-specific PUCCH (see TS 38.213 [13], clause 9.2.1). |

According to Table 14, *initialDownlinkBWP* may be used to configure the initial downlink BWP.

[Table 14]

| **DownlinkConfigCommonSIB field descriptions** |
|---|
| **bcch-Config** |
| The modification period related configuration. |
| **frequencyInfoDL-SIB** |
| Basic parameters of a downlink carrier and transmission thereon. |
| **initialDownlinkBWP** |
| The initial downlink BWP configuration for a PCell. The network configures the *locationAndBandwidth* so that the initial downlink BWP contains the entire CORESET#0 of this serving cell in the frequency domain. The UE applies the *locationAndBandwidth* upon reception of this field (e.g. to determine the frequency position of signals described in relation to this *locationAndBandwidth*) but it keeps CORESET#0 until after reception of *RRCSetup*/*RRCResume*/*RRCReestablishment.* |
| **pcch-Config** |
| The paging related configuration. |

Additionally, according to Table 15, *PUCCH-ConfigCommon* may also be used to configure cell-specific PUCCH parameters.

[Table 15]

| **PUCCH-ConfigCommon field descriptions** |
|---|
| **hoppingId** |
| Cell-specific scrambling ID for group hopping and sequence hopping if enabled, see TS 38.211 [16], clause 6.3.2.2. |
| **p0-nominal** |
| Power control parameter P0 for PUCCH transmissions. Value in dBm. Only even values (step size 2) allowed (see TS 38.213 [13], clause 7.2). |
| **pucch-GroupHopping** |
| Configuration of group- and sequence hopping for all the PUCCH formats 0, 1, 3 and 4. Value *neither* implies neither group or sequence hopping is enabled. Value *enable* enables group hopping and disables sequence hopping. Value *disable* disables group hopping and enables sequence hopping (see TS 38.211 [16], clause 6.3.2.2). |
| **pucch-ResourceCommon** |

(continued)

| **PUCCH-ConfigCommon field descriptions** |
|---|
| An entry into a 16-row table where each row configures a set of cell-specific PUCCH resources/parameters. The UE uses those PUCCH resources until it is provided with a dedicated *PUCCH-Config* (e.g. during initial access) on the initial uplink BWP. Once the network provides a dedicated *PUCCH-Config* for that bandwidth part the UE applies that one instead of the one provided in this field (see TS 38.213 [13], clause 9.2). |

According to Table 16, *PUSCH-ConfigCommon* may be used to configure cell-specific PUSCH parameters.

[Table 16]

| **PUSCH-ConfigCommon field descriptions** |
|---|
| **groupHoppingEnabledTransformPrecoding**<br>For DMRS transmission with transform precoder, the NW may configure group hopping by this cell-specific parameter, see TS 38.211 [16], clause 6.4.1.1.1.2. |
| **msg3-DeltaPreamble**<br>Power offset between msg3 and RACH preamble transmission. Actual value = field value * 2 [dB] (see TS 38.213 [13], clause 7.1) |
| **pO-NominalWithGrant**<br>P0 value for PUSCH with grant (except msg3). Value in dBm. Only even values (step size 2) allowed (see TS 38.213 [13], clause 7.1) This field is cell specific |
| **pusch-TimeDomainAllocationList**<br>List of time domain allocations for timing of UL assignment to UL data (see TS 38.214 [19], table 6.1.2.1.1-1). |

According to Table 17, *RACH-ConfigCommon* may be used to specify or configure cell-specific random access parameters.

[Table 17]

| **RACH-ConfigCommon field descriptions** |
|---|
| **messagePowerOffsetGroupB**<br>Threshold for preamble selection. Value is in dB. Value *minusinfinity* corresponds to -infinity. Value *dB0* corresponds to 0 dB, *dB5* corresponds to 5 dB and so on. (see TS 38.321 [3], clause 5.1.2) |
| **msg1-SubcarrierSpacing**<br>Subcarrier spacing of PRACH (see TS 38.211 [16], clause 5.3.2). Only the values 15 or 30 kHz (FR1), and 60 or 120 kHz (FR2) are applicable. If absent, the UE applies the SCS as derived from the *prach-ConfigurationIndex* in *RACH-ConfigGeneric* (see tables Table 6.3.3.1-1, Table 6.3.3.1-2, Table 6.3.3.2-2 and Table 6.3.3.2-3, TS 38.211 [16]). The value also applies to contention free random access (*RACH-ConfigDedicated*), to SI-request and to contention-based beam failure recovery (CB-BFR). But it does not apply for contention free beam failure recovery (CF-BFR) (see *BeamFailureRecoveryConfig*). |
| **msg3-transformPrecoder**<br>Enables the transform precoder for Msg3 transmission according to clause 6.1.3 of TS 38.214 [19]. If the field is absent, the UE disables the transformer precoder (see TS 38.213 [13], clause 8.3). |
| **numberOfRA-PreamblesGroupA**<br>The number of CB preambles per SSB in group A. This determines implicitly the number of CB preambles per SSB available in group B. (see TS 38.321 [3], clause 5.1.1). The setting should be consistent with the setting of *ssb-per-RACH-OccasionAndCB-PreamblesPerSSB*. |
| **prach-RootSequenceIndex**<br>PRACH root sequence index (see TS 38.211 [16], clause 6.3.3.1). The value range depends on whether L=839 or L=139 or L=571 or L=1151. The length of the root sequence corresponding with the index indicated in this IE should be consistent with the one indicated in *prach-ConfigurationIndex* in the *RACH-ConfigDedicated* (if configured). If *prach-RootSequenceIndex-r16* is signalled, UE shall ignore the *prach-RootSequenceIndex* (without suffix). |

(continued)

| RACH-ConfigCommon field descriptions |
|---|
| **ra-ContentionResolution Timer**<br>The initial value for the contention resolution timer (see TS 38.321 [3], clause 5.1.5). Value sf8 corresponds to 8 subframes, value sf16 corresponds to 16 subframes, and so on. |
| **ra-Msg3SizeGroupA**<br>Transport Blocks size threshold in bits below which the UE shall use a contention-based RA preamble of group A. (see TS 38.321 [3], clause 5.1.2). |
| **ra-Prioritization**<br>Parameters which apply for prioritized random access procedure on any UL BWP of SpCell for specific Access Identities (see TS 38.321 [3], clause 5.1.1a). |
| **ra-PrioritizationForAI**<br>Indicates whether the field *ra-Prioritization-r16* applies for Access Identities. The first/leftmost bit corresponds to Access Identity 1, the next bit corresponds to Access Identity 2. Value 1 indicates that the field *ra-Prioritization-r16* applies otherwise the field does not apply (see TS 23.501 [32]). |
| **rach-ConfigGeneric**<br>RACH parameters for both regular random access and beam failure recovery. |
| **restrictedSetConfig**<br>Configuration of an unrestricted set or one of two types of restricted sets, see TS 38.211 [16], clause 6.3.3.1. |
| **rsrp-ThresholdSSB**<br>UE may select the SS block and corresponding PRACH resource for path-loss estimation and (re)transmission based on SS blocks that satisfy the threshold (see TS 38.213 [13]. |

In this way, RRC configuration information such as *TDD-UL-DL-ConfigCommon, BWP-DownlinkCommon, PDCCH-ConfigCommon, PDSCH-ConfigCommon, ServingCellConfigCommonSIB, BWP-UplinkCommon, initialDownlinkBWP, PUCCH-ConfigCommon, PUSCH-ConfigCommon,* and *RACH-ConfigCommon* may provide configuration information on transmission parameters, transmission resources, etc., for cell-specific signals or channels.

## IAB (Integrated Access / Backhaul)

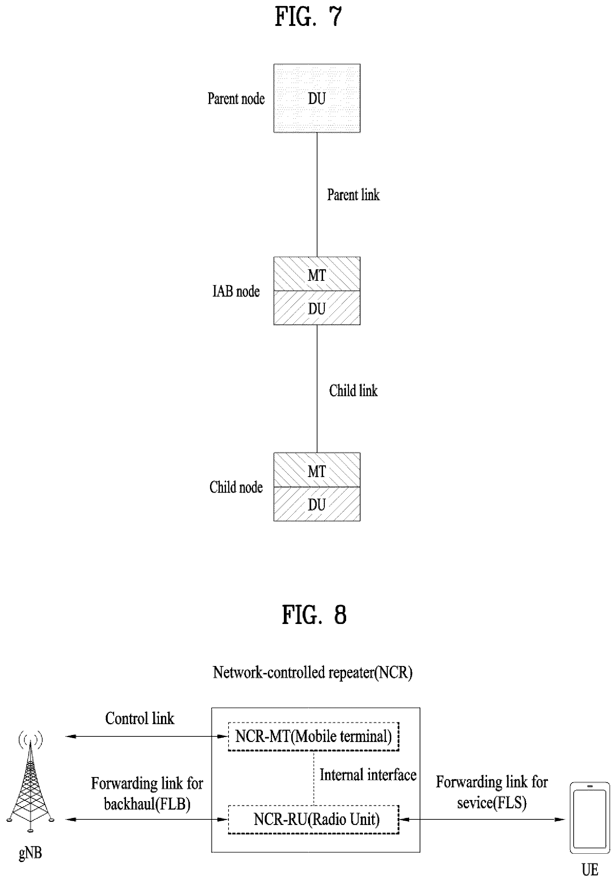

An example of a network with such integrated access and backhaul links is shown in Figure 7, where an IAB node or relay node (rTRP) can multiplex access and backhaul links in time, frequency, or space (e.g., beam-based operations).
The operations of different links may be at the same or different frequencies (also referred to as 'in-band' and 'out-band' relays). Efficient support of an out-band relay is important in some NR deployment scenarios, but it is very important to understand in-band operational requirements, which mean close interaction with an access link operating at the same frequency, to accept duplex constraints and avoid/mitigate interference.
In addition, operating an NR system in the mmWave spectrum may present several unique challenges, including experiencing severe short-term blocking that may not be easily mitigated by current RRC-based handover mechanisms due to the larger time scale required to complete a procedure in comparison to short-term blocking.
To overcome short-term blocking in mmWave systems, it may require a fast RAN-based mechanism (which does not necessarily require intervention of a core network) for inter-rTRP switching.
The need to mitigate short-term blocking of an NR operation in mmWave spectrum with the need for easier deployment of a self-backhauled NR cell may lead to the need for the development of an integrated framework that enables fast switching of access and backhaul links.
In addition, Over-The-Air (OTA) coordination between rTRPs may be considered as mitigating interference and supporting end-to-end route selection and optimization.
The following requirements and aspects may need to be resolved by an integrated access and wireless backhaul (IAB) for NR.

- Efficient and flexible operation for in-band and out-band broadcasting in indoor and outdoor scenarios
- Multi-hop and redundant connections
- End-to-end route selection and optimization
- Backhaul link support with high spectrum efficiency

- Legacy NR UE support

Legacy NR (new RAT) is designed to support half-duplex devices. In addition, half duplex of an IAB scenario is supported and worthy of being targeted. Furthermore, a full duplex IAB device may be studied.

In the IAB scenario, if each IAB node or Relay Node (RN) does not have scheduling capability, a Donor gNB (DgNB) must schedule the entire links among DgNB-related RNs and UEs. In other words, the DgNB may collect traffic information from all related RNs, make scheduling decisions for all links, and then inform each RN of schedule information.

FIG. 7 schematically illustrates an example of a parent link and a child link.

As shown in FIG. 7, a link between an IAB node and a parent node is called a parent link, and a link between an IAB node and a child node/UE is called a child link. That is, a link between MT and parent DU is called a parent link, and a link between DU and child MT/UE is called a child link.

Yet, depending on interpretation or perspective, a link between an IAB node and a parent node may be called a backhaul link, and a link between an IAB node and a child node/UE may be called an access link.

An IAB node may receive a slot format configuration for communication with a parent node and a slot format configuration for communication with a child node/access UE.

In the existing IAB node, a time division multiplexing (TDM) operation in which a DU and an MT operate through different time resources has been performed. On the other hand, resource multiplexing such as SDM/FDM, FC, etc. between the DU and the MT is required for efficient resource operation. As shown in FIG. 8, a link between the IAB node (IAB MT) and the parent node is referred to as a parent link, and a link between the IAB node (IAB DU) and the child node (child MT) is referred to as a child link. At this time, the TDM operation between the parent link and the child link has been discussed, and the SDM/FDM and FD operations are being discussed.

The DU and the MT existing in the same IAB node (or co-located) cannot operate simultaneously due to intra-node interference, slot/symbol boundary misalignment, power sharing, etc., and can operate in TDM. On the other hand, multiplexing of SDM/FDM may be used between the DU and the MT. Such multiplexing is applicable to an example case in which, since DU and MT use different panels, there is little interference between the panels. In this case, DU and MT existing (or co-located) in the same IAB node can transmit or receive data or information simultaneously, but it is impossible for each of the DU and the MT to perform transmission and reception simultaneously or to perform reception and transmission simultaneously.

Alternatively, FD may be used between the DU and the MT. This is applicable in cases where there is little interference between the DU and the MT, such as when a frequency domain where the DU operates and a frequency domain where the MT operates are far apart. In this case, the DU and the MT existing in the same IAB node (or co-located) can freely transmit and receive data simultaneously. The DU and the MT can transmit or receive data simultaneously, and it is also possible for each of the DU and the MT to perform transmission and reception simultaneously or to perform reception and transmission simultaneously.

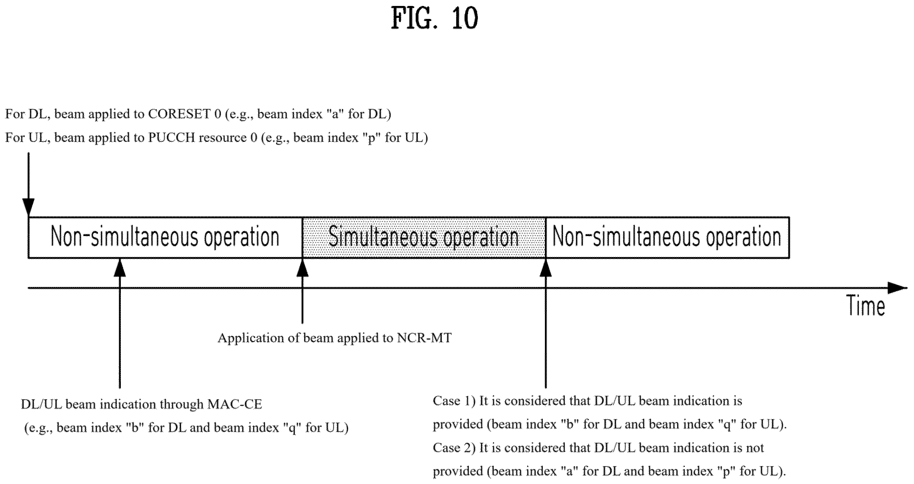

N MT-CCs and M DU-cells may exist in the IAB node. FIG. 10 shows an example where the IAB node is composed of three MT-CCs (where N=3) and three DU-cells (where M=3). MT-CCs existing in the IAB node may operate through the same or different frequency resources, and one MT-CC may be connected to one or more parent DU-cells. DU-cells existing in the IAB node may operate through the same or different frequency resources.

For a specific MT-CC/DU-cell pair within the IAB node, the MT-CC and the DU-cell may be in either TDM relationship or no-TDM relationship for the following four Tx/Rx direction combinations, and TDM or no-TDM may vary for each Tx/Rx combination.

- DU-Tx / MT-Tx
- DU-Rx / MT-Rx
- DU-Tx / MT-Rx
- DU-Rx / MT-Tx

For example, for a specific MT-CC/DU-cell pair, all of the four Tx/Rx combinations can operate with TDM. In this case, the corresponding DU-cell and the corresponding MT-CC should always operate with TDM regardless of Tx/Rx directions of the DU-cell and the MT-CC. In another example, for a specific MT-CC/DU-cell pair, all of the four Tx/Rx combinations can operate with no-TDM. In this case, the corresponding DU-cell and MT-CC can always operate simultaneously with no-TDM regardless of the Tx/Rx directions of the DU-cell and MT-CC. In another example, for a specific MT-CC/DU-cell pair, DU-Tx/MT-Tx and DU-Rx/MT-Rx can operate with no-TDM, and DU-Tx/MT-Rx and DU-Rx/MT-Tx can operate with TDM. The above-described operation relates to a method (e.g., SDM/FDM) for allowing simultaneous operation when the Tx/Rx directions of the DU-cell and the MT-CC are the same, and this method can operate simultaneously when the Tx/Rx directions of the DU-cell and the MT-CC are the same. TDM/no-TDM information for each Tx/Rx combination can be configured/determined differently or independently for each specific MT-CC/DU-cell pair within the IAB node.

At this time, the IAB MT may be connected to two parent DUs using, for example, a dual-connectivity method or a DAPS-HO method.

**Network-controlled repeater (NCR) in NR**

Coverage is a fundamental aspect of cellular network deployments. Mobile operators rely on different types of network nodes to offer blanket coverage in their deployments. Deployment of regular full-stack cells is one option but it may not always be possible (e.g., no availability of backhaul) or economically viable. As a result, new types of network nodes have been considered to increase mobile operators' flexibility for their network deployments. For example, Integrated Access and Backhaul (IAB) was introduced in Rel-16 and enhanced in Rel-17 as a new type of network node not requiring a wired backhaul. Another type of network node is the RF repeater which simply amplify-and-forward any signal that they receive. RF repeaters have seen a wide range of deployments in 2G, 3G and 4G to supplement the coverage provided by regular full-stack cells. In Rel-17, RAN4 specified RF and EMC requirements for such RF repeaters for NR targeting both FR1 and FR2. While an RF repeater presents a cost effective means of extending network coverage, it has its limitations. An RF repeater simply does an amplify-and-forward operation without being able to take into account various factors that could improve performance. Such factors may include information on semi-static and/or dynamic downlink/uplink configuration, adaptive transmitter/receiver spatial beamforming, ON-OFF status, etc.

A network-controlled repeater is an enhancement over conventional RF repeaters with the capability to receive and process side control information from the network. Side control information could allow a network-controlled repeater to perform its amplify-and-forward operation in a more efficient manner. Potential benefits could include mitigation of unnecessary noise amplification, transmissions and receptions with better spatial directivity, and simplified network integration.

FIG. 8 is a diagram illustrating an example of topology in which a network-controlled repeater (NCR) performs transmission and reception between the gNB and the UE.

Referring to FIG. 8, the NCR may include a radio unit (RU) and a mobile terminal (MT).

The gNB may include a central unit (CU) and/or a distributed unit (DU), and the NCR may be connected to the gNB. In the NCR, the MT may form a control link with the gNB, and the RU may form a forwarding link for backhaul with the gNB and a forwarding link for access with the UE.

The RU of the NCR may be composed of only an RF layer. The RU may receive a signal transmitted by the gNB through the forwarding link at the RF end and may forward the received signal to the UE. As a result, the signal received from the UE may be received by the RF end, and the received signal may be forwarded to the gNB. The RU may only transmit signals between the gNB and the UE, and may not generate signals/channels by itself and transmit the generated signals/channels to the gNB/UE. Alternatively, the RU receives signals/channels from the gNB/UE, but does not detect the received signals/channels. In order to forward the received signal, the RU may control the directions of the Tx/Rx beams, the DL/UL directions, ON/OFF information, transmission (Tx) power, etc. in the RF end. However, this RU operation cannot be determined by the NCR itself, and can be entirely controlled by the gNB.

The MT of the above NCR may include an RF layer and L1, L2, and/or L3 layers. For example, the MT may include only an RF layer and an L1 layer or may include the L1 and L2 layers. Alternatively, the MT may include an RF layer and L1/L2/L3 layers. The MT may detect/receive a signal/channel transmitted by the gNB and may generate a signal/channel to be transmitted to the gNB. In addition, the MT may receive information (e.g., side control information) necessary to control the operation of the RU from the gNB. Meanwhile, the MT may not perform transmission and reception with the UE.

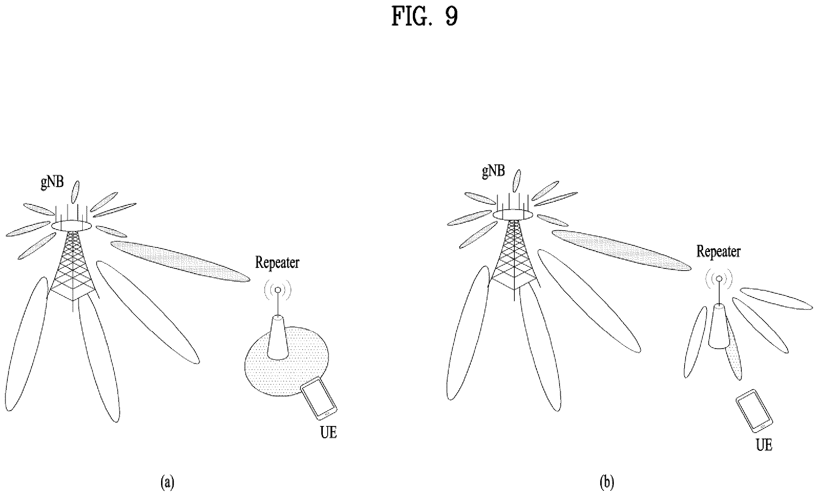

FIG. 9 is a diagram illustrating the radio frequency (RF) repeater and the NCR.

Referring to FIG. 9(a), the existing RF repeater may perform beamforming to which an omni-direction or fixed direction is applied. In contrast, referring to FIG. 9(b), the NCR can adaptively adjust the transmission/reception beam directions of the NCR according to the UE position and the channel condition of the UE, thereby obtaining a beamforming gain.

In addition, in the case of the existing RF repeater, since the DL/UL directions are not distinguished from each other in the TDD system, transmission and reception in the DL and UL directions are always performed simultaneously. Alternatively, only the fixed TDD configuration is applied to the existing RF repeater, so that switching between the DL direction and UL direction has been performed using a fixed time pattern. In contrast, the NCR may perform DL/UL switching in consideration of a TDD configuration. Through this, switching is being considered. As a result, the NCR can enable adaptive DL/UL operation, may minimize power consumption caused by forwarding unnecessary signals, and may also minimize interference.

In addition, in the case of the existing RF repeater, the power of a signal that is received regardless of whether the gNB and the UE transmit signals is always amplified and transmitted. As a result, unnecessary power consumption and interference to the surroundings are unavoidably increased. In contrast, the NCR performs ON/OFF operations, and when there is no signal to be transmitted to the gNB and UE, the operation of the RU is turned off, so that unnecessary signals are not transmitted.

In addition, in the case of existing RF repeaters, power of a signal received at a fixed ratio is amplified and transmitted. When a signal is transmitted with unnecessarily large power, interference affecting the surroundings may decrease by reducing transmission (Tx) power of the NCR. When a signal is transmitted with low power, transmission (Tx) power of the NCR is increased so that the signal can be stably transmitted to the receiver.

In addition, the existing RF repeater has been operated without recognizing a DL/UL slot boundary. On the other hand, in order for the NCR to adaptively adjust beamforming, ON/OFF, DL/UL directions, transmission power, etc. as described above, the NCR must know transmission/reception (Tx/Rx) boundaries of a downlink (DL). As a result, the RU operation can be applied differently for each unit time (e.g., slot/symbol).

## Side control information for NCR

Hereinafter, the operation in the NCR will be assumed for convenience of description. However, the content described below can be applied to devices other than the NCR. In particular, the content described below can be applied for the operation of RIS. To this end, the NCR mentioned in the present disclosure can be replaced with 'RIS' and expanded/interpreted. In this case, the RU may serve to forward signals from the gNB to the UE in RIS and to forward signals from the UE to the gNB in RIS, and the MT may serve to receive side control information required for controlling signal transmission of the RU from the gNB. Meanwhile, the term "network" may hereinafter be interpreted as "gNB" or "CU/DU." In addition, the term "gNB" may hereinafter be interpreted as "network," "CU," or "DU."

In order for the NCR to forward the signal received by the RU, it may be considered that the directions of transmission/reception (Tx/Rx) beams, DL/UL directions, ON/OFF states, transmission (Tx) power, etc. are adjusted at the RF end. However, the RU operation cannot be determined by the NCR itself, and may be entirely controlled by the gNB. To this end, the MT may receive information (i.e., side control information) necessary to control the RU operation from the gNB. This side control information may be transmitted through L1/L2 signaling such as MAC-CE and DCI.

The above-described side control information may include all or part of the following information.

- Beamforming information: Information on the transmission/reception (Tx/Rx) beam direction of the RU
  Here, beamforming information may include a beam direction for UL transmission to the gNB, a beam direction for DL reception from the gNB, a beam direction for DL transmission to the UE, and/or a beam direction for UL reception from the UE.
- Timing information to align transmission/reception boundaries of network-controlled repeater (NCR): Information for the RU to align transmission/reception (Tx/Rx) slots symbol boundaries
- Information on UL-DL TDD configuration: information on DL/UL directions of the RU
- ON-OFF information for efficient interference management and improved energy efficiency: Information on ON-OFF operations of the RU
- Power control information for efficient interference management: Information on transmission (Tx) power of the RU, and such information may include UL transmission (Tx) power to the gNB and/or DL transmission (Tx) power to the UE.

The NCR may be composed of two parts: an NCR-mobile termination (NCR-MT), which receives side control information from the gNB and transmits a report to the gNB, and an NCR-forwarding (NCR-Fwd), which receives a transmission signal from the gNB and forwards the signal to the UE or receives a transmission signal from the UE and forwards the signal to the gNB.

In this regard, the following scenarios may be considered.

- NCR-mobile termination (NCR-MT) may be defined as a functional entity that enables exchange of control information (e.g., side control information) by communicating with the gNB through a control link (C-link). The C-link is based on an NR Uu interface. For reference, the side control information is for at least control of an NCR-forwarding.
- NCR-forwarding (NCR-Fwd) is defined as a functional entity that amplifies and forwards a UL/DL RF signal between the gNB and the UE through a backhaul link and an access link. The operation of the NCR-Fwd may be controlled based on the side control information received from the gNB.

In NR, since cost efficiency is important for the NCR, it is assumed that the NCR uses an AF (amplify and forward) relay rather than a DF (decode and forward) relay. Therefore, a signal that the NCR-Fwd receives from the UE and transmits to the gNB is simply amplified and forwarded without decoding. As a result, there may be limitations in transmitting a transmission signal from the NCR-MT together on these transmission resources. For example, to multiplex the reception signal received from the UE and the transmission signal from the NCR-MT, the NCR-Fwd needs to know in advance the time/frequency domain or resource where the reception signal from the UE exists. Additionally, the synchronization between the reception signal and the transmission signal should be perfectly aligned. However, such recognition of the time/frequency resources for the reception signal and the synchronization alignment may not be allowed in the AF relay. Due to limitations on the power of the transmission signal of the NCR imposed by regulations, it may be difficult for UL transmission of the NCR-Fwd and UL transmission of the NCR-MT to occur on the same time resource. In this context, it may be assumed that the UL transmission of the NCR-MT and NCR-Fwd operates based on TDM.

Hereinafter, beam adaptation between a gNB and RU will be described. Even for a fixed NCR without mobility, if changes in scatter are considered, or if an NCR with mobility is considered later, an indication for beam adaptation between the gNB and RU may be necessary. However, if the RU only exists at the radio frequency (RF) layer, the RU may not directly receive information on the control of transmission and reception beams. Alternatively, even if there are other layers in addition to the RF layer in the RU, the RU needs to perform relaying, and thus the RU may need to further receive beam information from the MT. Additionally, it may not be ruled out that an NCR with mobility, considered after Rel-19, will be discussed instead of a fixed NCR. In this context, methods by which the MT receives beam information between the gNB and RU will be described.

Since the RU is incapable of directly transmitting or receiving data with the gNB (i.e., the RU is incapable of directly receiving information for the RU from the gNB), one of the most basic ways to determine the beams of the RU is to use the Tx/Rx beams that the MT uses as the Tx/Rx beams of the RU. However, since the Tx/Rx beams used by the MT are not fixed to a single one, it is necessary to define which of the multiple Tx/Rx beams used by the MT will be used as the beams of the RU. Hereinafter, methods for determining/configuring the Tx/Rx beams of the RU based on at least one of the multiple Tx/Rx beams used by the MT will be described in detail.

The gNB may indicate the beam direction of the RU through at least one of the methods described in the following scenarios and alternatives, based on the capability of the NCR. Here, the capability of the NCR may be related to whether the control link of the MT (C-link) (MT) and the backhaul link (RU) of the NCR may operate based on different beams. For example, if the NCR reports to the gNB that the NCR has the capability to operate with different beams for the C-link and backhaul link, the NCR may explicitly receive a beam for the backhaul link from the gNB. In this case, the NCR may receive the beam direction of the backhaul link based on Scenario 1, which will be described later. In other words, an NCR node that supports the use of beams with different directions between the backhaul link and C-link may explicitly receive the beam for the backhaul link (or the beam of the backhaul link).

## 1. Scenario 1

The NCR (or MT) may be configured/indicated with information on the Tx/Rx beams of the RU based on information on the Tx/Rx beam of the MT. In other words, the NCR (or MT) may directly receive the Tx/Rx beam of the backhaul link (gNB-to-RU link or forwarding link) (or the Tx/Rx beam of the RU) from the gNB. On the other hand, the NCR may have the Tx/Rx beam of the RU differ from the Tx/Rx beam of the MT, depending on the beam direction that the gNB instructs the MT to use.

### (1) Method of indicating DL Rx beam of RU

In particular, the NCR (or MT) may receive the DL Rx beam of the backhaul link among the Tx/Rx beams of the RU from the gNB through the methods described later. To inform the DL Rx beam of the RU, the gNB may provide the MT with beam information as described later. Here, the gNB may indicate the Rx beam of the RU corresponding to the Rx beam of the MT. In other words, to indicate the DL Rx beam of the RU, the gNB may inform the MT of an SSB index, a CSI-RS index, a TCI state ID, etc., through RRC/MAC-CE/DCI. The TCI state ID may be defined through pdsch-Config, which is a UE-specific PDSCH configuration indicated for a single BWP (BWP-DownlinkDedicated) (refer to 3GPP TS 38.331). In other words, the CSI-RS and TCI state ID may be BWP-specific and UE-specific values for the MT. Since a criterion is needed to determine the single BWP for the determination of the DL Rx beam of the RU, the single BWP related to the determination of the DL Rx beam of the RU may be defined by prior agreement. For example, the single BWP may be the default BWP or initial BWP of the MT. Alternatively, the gNB may indicate/configure the single BWP related to the TCI state ID for indicating the DL Rx beam of the RU from among the BWPs of the MT through RRC/MAC-CE/DCI. In the indication for the DL Rx beam, information about the number of slots may also be included. For example, if the number of slots k is indicated, the gNB may expect that the DL Rx beam of the RU will switch to the indicated beam direction after k slots from a slot where the DL Rx beam of the RU is indicated (after when a DL RS for the beam change is indicated) based on the (slot boundary of) MT. Alternatively, without separate indications for the number information, the beam direction of the DL Rx beam of the RU may be changed to the indicated beam direction after a specific slot/symbol configured by a prior agreement or promise.

Alternatively, for the number of slots or a slot offset, a specific operation may be agreed upon as the default behavior. For example, when the number of slots is indicated together (with the beam direction of the RU), the indicated beam direction of the RU (the DL Rx beam of the RU) may be applied as the beam direction of the RU during the time duration corresponding to the indicated number of slots from a pre-agreed time. For example, when the DL beam direction of the RU and k slots/subframes/symbols are indicated together, the DL beam direction of the RU may be set to the beam direction indicated by the gNB during the time duration corresponding to the k slots/subframes/symbols from the pre-agreed time. After the time duration has elapsed, the DL beam of the RU may switch to the DL beam direction prior to the indication of the beam direction, or the beam direction may change to a pre-agreed default beam.

Alternatively, if there is no explicit indication for the DL Rx beam of the RU or the beam direction of the backhaul link, a default beam based on a prior agreement or promise may be applied as the DL Rx beam of the RU (refer to Scenario 2). The default beam may be applied after the expiration of an explicitly indicated valid time, before any explicit beam direction indication is given, or for time resources or time durations where there are no valid backhaul link beams on specific time resources. Alternatively, a method of turning the RU or NCR-Fwd off (i.e., when forwarding operations by the NCR or RU are not performed) may also be considered as a method for configuring the default beam. Alternatively, the way the RU or NCR-Fwd is turned OFF (i.e., when forwarding operation by NCR or RU is not performed) may also be considered as a method for setting the default beam. For example, if there is no explicit indication for the beam direction of the backhaul link, or if no beam is configured or present for the valid backhaul link on specific time resources, or if no valid backhaul link beam exists on specific time resources, the default beam based on the prior agreement or promise may be applied.

<u>(2) Method of indicating UL Tx beam of RU.</u>

Next, the MT or NCR may receive the UL Tx beam of the backhaul link among the beams of the RU from the gNB. In other words, the gNB may provide the MT with the UL Tx beam of the RU according to the following methods. The Tx beam of the MT corresponding to the indication of the gNB may be applied as the UL Tx beam of the RU. For example, the gNB may provide the MT with the UL Tx beam of the RU through an SRS resource indicator (SRI). Similar to the DL Rx beam of the RU described above, the UL Tx beam of the MT is a BWP-specific configuration, and thus at least one BWP related to the indication of the UL Tx beam of the RU may be defined or indicated in advance through a prior agreement or promise. For example, the BWP agreed upon in advance may be the default BWP or initial BWP of the MT. Alternatively, the gNB may designate/indicate at least one of the BWPs of the MT as the BWP related to the SRI (or TCI state ID) for indicating the UL Tx beam of the RU through RRC/MAC-CE/DCI. In the indication for the DL Rx beam, information about the number of slots may also be included. For example, if the number of slots k is indicated, the gNB may expect that the UL Tx beam of the RU will switch to the indicated beam direction after k slots from a slot where the DL Rx beam of the RU is indicated (after when a DL RS for the beam change is indicated) based on the (slot boundary of) MT. Alternatively, without separate indications for the number information, the beam direction of the UL Tx beam of the RU may be changed to the indicated beam direction after a specific slot/symbol configured by a prior agreement or promise.

Alternatively, for the number of slots or a slot offset, a specific operation may be agreed upon as the default behavior. For example, when the number of slots is indicated together (with the beam direction of the RU), the indicated beam direction of the RU (the UL Tx beam of the RU) may be applied as the beam direction of the RU during the time duration corresponding to the indicated number of slots from a pre-agreed time. For example, when the direction of the UL Tx beam of the RU and k slots/subframes/symbols are indicated together, the direction of the UL Tx beam of the RU may be set to the beam direction indicated by the gNB during the time duration corresponding to the k slots/subframes/symbols from the pre-agreed time. After the time duration has elapsed, the UL Tx beam of the RU may switch to the direction of the UL Tx beam prior to the indication of the beam direction, or the beam direction may change to a pre-agreed default beam.

Alternatively, if there is no explicit indication for the UL Tx beam of the RU or the beam direction of the backhaul link, a default beam based on a prior agreement or promise may be applied as the UL Tx beam of the RU (refer to Scenario 2). The default beam may be applied after the expiration of an explicitly indicated valid time, before any explicit beam direction indication is given, or for time resources or time durations where there are no valid backhaul link beams on specific time resources. Alternatively, a method of turning the RU or NCR-Fwd off (i.e., when forwarding operations by the NCR or RU are not performed) may also be considered as a method for configuring the default beam. Alternatively, the way the RU or NCR-Fwd is turned OFF (i.e., when forwarding operation by NCR or RU is not performed) may also be considered as a method for setting the default beam. For example, if there is no explicit indication for the beam direction of the backhaul link, or if no beam is configured or present for the valid backhaul link on specific time resources, or if no valid backhaul link beam exists on specific time resources, the default beam based on the prior agreement or promise may be applied.

<u>(3) Indication of beams of RU regardless of distinction between DL Rx beams and UL Tx beams of RU</u>

Alternatively, the gNB may explicitly indicate the beams of the RU (the RU DL Rx beam and RU UL Tx beam) for the backhaul link using the aforementioned methods, without distinguishing between the DL Rx beam of the RU and the UL Tx beam of the RU. In other words, the gNB may inform a change in the DL Rx beam and UL Tx beam of the RU for the backhaul link through a single indication. For example, the gNB may inform a change in both the DL Rx beam and UL Tx beam of the RU by providing specific information on the beam change of the RU to the MT. The single indication (or the indication of specific information) may be indicated based on the DL Rx beam of the MT or the UL Tx beam of the MT. For convenience of description, the DL Rx beam and UL Tx beam of the RU will be defined and described as the beam of the RU or the beam of the backhaul link.

For example, the gNB may inform the MT of the change in the beam of the RU for the backhaul link using an SSB index, CSI-RS index, TCI state ID, etc., through RRC/MAC-CE/DCI. Alternatively, the gNB may inform the MT of the change in the beam of the RU for the backhaul link using an SRI. The RU may not have an independent beam report, and thus the beam of the RU may be aligned based on the beam of the MT. Therefore, the QCL relationship (relation) between the Tx/Rx beams of the MT may also be applied to the (Rx/Tx) beams of the RU. For example, in relation to the aforementioned method, when the gNB informs the MT of the SSB index and/or CSI-RS index to change the beam of the RU, the DL Rx beam of the RU may be aligned with the DL Rx beam of the MT corresponding to the indicated SSB index and/or CSI-reception index, and the UL Tx beam of the RU may be aligned with the UL Tx beam of the MT corresponding to the indicated SSB index and/or CSI-reception index. In other words, the gNB may indicate the beam of the RU through the SSB index and/or CSI-reception index related to the control link for the MT.

Alternatively, time offset information (or information about the number of slots) may be transmitted along with the indication for the beam of the RU. Here, the time offset information may include information about a time offset in unit of slots, subframes, or symbols. For example, if time offset information on k slots is indicated along with the indication for the beam of the RU, the gNB may expect that the change or switching of the beam of the RU will be performed from the k slots after when the beam change is indicated (or when the beam change indication is received), based on the MT. Alternatively, even if the slot offset information on the number of slots is not separately indicated, the change to the indicated beam of the RU may be applied after a specific time based on a prior agreement or promise. For the time offset, a specific operation may be agreed upon as the default behavior. For example, if the slot offset (or the number of slots) is indicated together, the indicated beam of the RU may be applied during the time duration corresponding to the indicated slot offset from a pre-agreed time. Alternatively, when the change of the beam of the RU and the time offset (k slot/subframe/symbol) are indicated together, the beam of the RU may be set to the indicated beam direction during the time duration corresponding to the time offset from the pre-agreed time. Furthermore, after the time duration has passed, the beam of the RU may be changed to the previous beam of the RU used before the beam indication or to a pre-agreed default beam.

Alternatively, if the beam of the RU (or the beam for the backhaul link) is not explicitly indicated, the beam of the RU may be applied or determined as the default beam based on a prior agreement or promise. The default beam may be configured or defined through the indication method described in Scenario 2, which will be discussed later. Here, the default beam may be applied after the expiration of the valid time for the explicit beam direction indication. Alternatively, the default beam may be applied if there is no explicit beam direction indication, if no valid beam of the RU exists on specific time resources, or if the backhaul link (NCR-Fwd) is off. In other words, if there is no explicit beam direction indication or if no valid beam of the RU (or no beam for the backhaul link) exists on specific time resources, the default beam agreed upon in advance may be applied as the beam of the RU. The default beam may be determined/configured through methods described in Scenario 2, which will be discussed later. Alternatively, during the specific time resources (or during the time when the default beam is applied), forwarding operations through the backhaul link may not be performed.

The "indication of the change of the DL Rx beam and/or UL Tx beam without performing separate indications for the DL Rx beam and UL Tx beam" may be performed based on a unified TCI framework. Here, the unified TCI framework, introduced in Rel-17 MIMO, differs from the existing TCI framework, where a TCI state is indicated independently for each DL/UL channel/RS. For example, the existing TCI framework has advantages in terms of flexibility but has disadvantages in terms of signaling overhead and latency. In other words, for most UEs that apply one beam at a time, the gNB needs to separately perform a beam change indication for each DL/UL channel/RS in order to change the beam of the UE. In contrast, the unified TCI framework (in Rel-17 MIMO) defines a joint TCI state, and based on the indicated TCI state, integrated beam control may be supported for DL/UL data channels (PDSCH/PUSCH), DL/UL control channels (PDCCH/PUCCH), antenna port (AP) CSI-RSs, and sounding reference signal (SRSs). For example, in the unified TCI framework, DL DCI formats (1_1/1_2) may be used in the DCI-based method, and PDSCH assignment information (i.e., data assignment) may be included or omitted. In other words, in the unified TCI framework, even if there is no data/channel to transmit or receive, the DL DCI formats described above may be used for beam indications through the TCI state. In this case, some of the existing TCI field indicator values within the DCI may be changed and used for the beam indications.

Based on this (i.e., based on the unified TCI framework), as the method of "indicating the change of the DL Rx beam or UL Tx beam through a single indication, without performing separate indications for the DL Rx beam and UL Tx beam," the gNB may indicate the simultaneous change of the beam of the RU (or the DL Rx beam o and UL Tx beam of the RU) included in the NCR through the indication of the joint TCI state. Here, the joint TCI state may be a TCI state related to the control link, C-link. In this way, when the change of the DL Rx beam and UL Tx beam of the RU is indicated through the indication of the joint TCI state, the application time and period of the joint TCI state may be indicated along with the indication of the joint TCI state ID. Alternatively, the application time and period of the joint TCI state may be configured based on a prior agreement or promise. For example, the application time of the joint TCI state may be continuously applied from a specific number of slots/symbols after the indication of the joint TCI state is received by the NCR or MT. Alternatively, the joint TCI state may be applied from the time when the indication is received.

## 2. Scenario 2 - Determination of beam of RU based on predefined rules

Scenario 2 describes cases where the Tx/Rx beam of the RU is not directly indicated, and a beam corresponding to a specific Tx/Rx beam of the MT, which is pre-agreed/defined/configured (i.e., based on predefined rules), is used (for example, if the NCR lacks the ability to receive indications for the beam of the backhaul link or even if the NCR has the ability, the beam is not indicated by the gNB). Although the gNB does not directly indicate the Tx/Rx beam of the backhaul link to the MT, the gNB may expect that the Tx/Rx beam for the backhaul link will be configured based on the prior agreement or promise described below. In this case, it may be defined/agreed/configured in advance that the Tx/Rx beam of the RU corresponds to a beam used by the MT for transmitting and receiving specific signals/channels. Depending on the beam direction indicated by the gNB for the MT of the NCR, the Tx/Rx beam of the RU and the Tx/Rx beam of the MT may differ from each other.

Scenario 2 described below may be applied (or limited) when the frequency at which the MT operates is the same as or at least within the intra-band of the frequency at which the RU operates. In other words, Scenario 2 may be applied when the time and/or frequency resources between the MT and RU match, or when the time and/or frequency resources between the MT and RU overlap in part, or even if the time and/or frequency resources do not overlap, when the frequency bands are closely related such that emission may occur in adjacent bands between the transmission of the MT and the reception of the RU (and/or the transmission of the RU and the reception of the MT). To indicate the DL Rx beam of the RU, the following alternatives may be considered. Alternatively, as mentioned above, Scenario 2 may be applied when transmission or reception on the control link and transmission or reception on the backhaul link are not performed simultaneously.

For example, the application of Scenario 2, which will be described later, may be determined based on whether the time resources for the MT or C-link overlap with the time resources for the RU or backhaul link. For example, if the time resources for the MT or C-link do not overlap with the time resources for the RU or backhaul link (and/or if there is no explicit indication described in scenario 1), the beam for the backhaul link may be determined based on the predefined rules described in Scenario 2.

Meanwhile, the alternatives described later may be based on the unified TCI framework. In other words, when the NCR determines the DL Rx beam of the RU according to the methods described later, the NCR may change the UL Tx beam of the RU to a UL Tx beam associated with the DL Rx beam of the RU, which is agreed/defined/configured in advance. Alternatively, the NCR may consider that the change is indicated. Alternatively, the NCR may change the UL Tx beam of the RU to a UL Tx beam associated with the DL Rx beam of the RU, which is agreed/defined/configured in advance. Alternatively, the NCR may consider that the change is indicated. The association between the DL Rx beam and UL Tx beam of the RU may be determined based on the joint TCI state of the NCR.

When the DL Rx beam and UL Tx beam of the RU are changed by the indication of the joint TCI state, the application time of the joint TCI state and the application period of the indicated joint TCI state may be configured based on a prior agreement or promise. For example, the joint TCI state may be applied after a specific number of slots/symbols from the time when the joint TCI state is indicated, or the application time of the joint TCI state may correspond to the time when the joint TCI state is indicated.

### (1) Alternative 2-1 - Based on predefined CSS

The (DL) Rx beam of the RU may be defined/configured/agreed in advance to align or correspond with the Rx beam of the MT applied for receiving a PDCCH in a Type0-PDCCH CSS. In other words, the DL Rx beam of the RU for the backhaul link may correspond to an Rx beam of the MT used for receiving a signal that the gNB uses for broadcasting system information.

In relation to the indication of the DL Rx beam (or the DL Rx beam of the RU), the gNB may also agree/define/configure in advance time offset information on the number of slots (or time offset) (the time offset information may be transmitted together). For example, from a specific time based on a prior agreement or promise, the DL Rx beam of the RU may be changed to correspond to a specific beam direction of the MT. Alternatively, the beam change according to Alternative 2-1 of Scenario 2 may be applied to a time duration other than the indication of the beam change and time offset according to scenario 2 1. For example, as mentioned above, the beam change according to Alternative 2-1 of Scenario 2 may be defined as the default behavior. Specifically, when a beam change to a first DL Rx beam and a time offset of k slots are indicated according to Scenario 1, the NCR may change the DL Rx beam of the RU to the first DL Rx beam based on the k slots. Once the application of the change to the first DL Rx beam according to Scenario 1 ends, the DL Rx beam of the RU may be configured/changed according to Alternative 2-1. Alternatively, the beam change according to Alternative 2-1 of Scenario 2 may be applied when there is no indication for the beam change according to Scenario 1.

## (2) Alternative 2-2 - Based on predefined search space

In Alternative 2-2, it may be agreed/defined/configured in advance that the Rx beam of the RU corresponds to a (DL) Rx beam used by the MT for receiving a PDCCH in a specific search space among the Rx beams of the MT. The specific search space may be a search space corresponding to a search space ID indicated by the gNB.

Specifically, it may be agreed/defined/configured in advance that the Rx beam of the RU corresponds to an Rx beam of the MT used for receiving a specific search space set configuration (search space set configuration), rather than broadcasting system information. Alternatively, when the gNB transmits an MT-specific (or UE-specific) control signal rather than broadcasting system information, it may be defined/agreed/configured in advance that the Rx beam of the RU corresponds to the Rx beam used by the MT to receive the control signal. As mentioned above, the search space ID for transmitting the MT-specific control signal is transmitted in an MT-specific BWP (or UE-specific BWP), and thus it is necessary to define/specify which BWP the Rx beam of the RU corresponds to for the Rx beam of the MT. For example, the Rx beam of the RU may correspond to the Rx beam of the MT in a search space related to a specific BWP of the MT (e.g., default BWP or initial BWP) based on a prior agreement or promise. Alternatively, the gNB may also indicate the search space ID for the MT corresponding to the Rx beam of the RU, along with the ID of the BWP corresponding to the search space ID.

The application time of the Rx beam of the RU according to Alternative 2-2 of Scenario 2 may be determined based on a time offset defined/configured/agreed in advance, or it may be a time duration where the beam change and time offset according to Scenario 1 are not applied. For example, as mentioned above, the beam change according to Alternative 2 of Scenario 2 may be defined as the default behavior. Specifically, when the change to the first DL Rx beam and the time offset of k slots are indicated according to Scenario 1, the NCR may change the DL Rx beam of the RU to the first DL Rx beam based on the k slots. Once the application of the change to the first DL Rx beam according to Scenario 1 ends, the NCR may configure/change the DL Rx beam of the RU according to Alternative 2-2. Alternatively, the beam change according to Alternative 2-2 of Scenario 2 may be applied when there is no indication for the beam change according to Scenario 1.

Alternatively, in relation to the application of Alternative 2-2, if the gNB does not indicate the search space ID for the specific search space, the ID for the specific search space may be agreed/defined in advance. In other words, the Rx beam of the RU may be agreed/defined in advance to correspond to the Rx beam used or applied by the MT in the specific search space, which is agreed/defined in advance, even if there is no explicit indication from the gNB for the specific search space. For example, the specific search space may be agreed/defined in advance as a search space with the lowest index, highest index, or middle index among the search spaces for the MT. In this case, a BWP related to the specific search space, which is agreed/defined in advance, may also be agreed/defined as the active BWP, the default BWP, the initial BWP, or the BWP with the highest index (or the BWP with the lowest index).

## (3) Alternative 2-3 - Based on predefined CORESET.

In Alternative 2-3, it may be agreed/defined/configured in advance such that the Rx beam of the RU corresponds to an Rx beam used by the MT in a specific CORESET among the Rx beams of the MT. Here, the specific CORESET may be configured/determined by a CORESET ID indicated by the gNB. Alternatively, the specific CORESET may be agreed/defined in advance.

Alternatively, unlike Alternative 2-1 and Alternative 2-2, the gNB may indicate the Rx beam of the MT through the indication of the CORESET ID without indicating a specific search space for the MT. Since the CORESET is also BWP-specific, similarly to Alternative 2-2, the CORESET may be a specific CORESET indicated for a pre-agreed/predefined MT-specific BWP (e.g., default BWP or initial BWP). Alternatively, the gNB may indicate both the CORESET ID and BWP ID of the MT in relation to the Rx beam of the RU.

Alternatively, in the indication of a DL Rx beam, time offset information such as the number of slots may also be included. For example, if the gNB indicates the Rx beam of the MT and k slots for the specific CORESET ID, the gNB may expect that the DL Rx beam of the RU will switch to the indicated direction after k slots from the indication of a DL RS for the beam change, based on the MT. Alternatively, even if the time offset information on the number of slots is not indicated, the change to the indicated DL Rx beam may be applied starting from a specific time based on a prior agreement or promise. For a slot offset (included in the time offset information), a specific operation may be agreed upon as the default behavior. If the slot offset is not indicated, the default behavior is performed, and if the slot offset is indicated, an indicated operation is performed. For example, when the slot offset is indicated, the indicated DL Rx beam of the RU may be applied for a time duration corresponding to the indicated slot offset from a pre-agreed time. For example, if the change of the DL Rx beam of the RU and a time offset of k (k slots/subframes/symbols) are indicated together, the DL Rx beam of the RU may be set to the indicated beam (or beam direction) for the time duration corresponding to the time offset of k (k slots/subframes/-symbols) from the pre-agreed time. After this time duration, the beam may be set to the DL Rx beam before the indication or to a pre-agreed default beam.

Alternatively, in relation to the application of Alternative 2-3, if the gNB indicate the specific CORESET ID, the specific CORESET ID may be agreed/defined in advance. In other words, the Rx beam of the RU may be agreed/defined in advance to correspond to the Rx beam used or applied by the MT for the specific CORESET ID, even if there is no explicit indication from the gNB for the specific CORESET ID. For example, the specific CORESET ID may be pre-agreed/pre-defined as the lowest index, highest index, or middle index among the CORESET IDs (configured) for the MT. In this case, a BWP related to the pre-agreed/predefined specific CORESET ID may also be agreed/defined in advance as the active BWP, the default BWP, the initial BWP, or the BWP with the highest index (or the BWP with the lowest index).

(4) Alternative 2-4 - Based on TCI state ID

The Rx beam of the RU may be pre-agreed/predefined to correspond to the Rx beam of the MT where a TCI state ID indicated by the gNB is applied.

Alternatively, in the indication of a DL Rx beam, time offset information such as the number of slots may also be included. For example, if the gNB indicates the Rx beam of the MT and k slots for the specific TCI state ID, the gNB may expect that the DL Rx beam of the RU will switch to the indicated direction after k slots from the indication of a DL RS for the beam change, based on the MT. Alternatively, even if the time offset information on the number of slots is not indicated, the change to the indicated DL Rx beam may be applied starting from a specific time based on a prior agreement or promise. For a slot offset (included in the time offset information), a specific operation may be agreed upon as the default behavior. If the slot offset is not indicated, the default behavior is performed, and if the slot offset is indicated, an indicated operation is performed. For example, when the slot offset is indicated, the indicated DL Rx beam of the RU may be applied for a time duration corresponding to the indicated slot offset from a pre-agreed time. For example, if the change of the DL Rx beam of the RU and a time offset of k (k slots/subframes/symbols) are indicated together, the DL Rx beam of the RU may be set to the indicated beam (or beam direction) for the time duration corresponding to the time offset of k (k slots/subframes/-symbols) from the pre-agreed time. After this time duration, the beam may be set to the DL Rx beam before the indication or to a pre-agreed default beam.

Alternatively, in relation to the application of Alternative 2-4, if the gNB indicates no TCI state ID, the specific TCI state ID related to the determination of the Rx beam of the RU may be agreed/defined in advance. For example, the specific TCI state ID may be pre-agreed/predefined as the lowest or highest index among the TCI state IDs for the MT. In this case, a BWP related to the pre-agreed/predefined specific TCI state ID may also be agreed/defined in advance as the active BWP, the default BWP, the initial BWP, or the BWP with the highest index (or the BWP with the lowest index).

(5) Alternative 2-5 - Based on reception of side control information

In Alternative 2-5, it may be agreed/defined/configured in advance that the Rx beam of the RU corresponds to an Rx beam used by the MT for controlling the backhaul link of the RUI when side control information is transmitted. In this case, the side control information may be transmitted over a PDCCH in a search space for the MT, or over a PDSCH, or over both the PDCCH and PDSCH. For each case, Options 1, Option 2, and Option 3 below may be considered.

1) Option 1: When the side control information is transmitted only over the PDCCH in the search space.

In this case, since the search space corresponds to an MT-specific search space, the method proposed in 'Alternative 2-2' may be used. However, since there may be multiple search spaces where the side control information is transmitted, it is necessary to clearly define a search space where Option 1 is applied for the transmission of the side control information (the case where the search space ID is directly indicated may be the same as Alternative 2-2). For example, it may be assumed that the MT is instructed to change the DL Rx beam of the RU based on the side control information received in a predefined/pre-agreed specific search space. In this case, the NCR may determine the DL Rx beam of the MT applied for receiving the side control information in the specific search space as the DL Rx beam of the RU, or the NCR may assume that the DL Rx beam of the MT is indicated by the gNB. For example, the specific search space may be a search space with the smallest or highest index among search space IDs. Alternatively, a specific search space ID may be pre-agreed/predefined as at least one ID among multiple search space IDs for the MT. In this case, the specific search space may be limited to a BWP in which the MT receives the side control information. Alternatively, the specific search space may be configured for a designated specific BWP, or the specific search space may be the search space of a specific BWP based on a prior agreement. For example, the specific search space may be the default BWP, the initial BWP, the BWP with the lowest or highest BWP ID.

2) Option 2: When the side control information of the MT is transmitted only over the PDSCH.

Option 2 may be the case where the gNB instructs the MT to change the DL Rx beam of the RU over the PDSCH. In this case, the gNB may expect that the DL Rx beam of the RU will be changed to a beam used by the MT to receive the PDSCH.

3) Option 3: When the side control information of the MT is transmitted over both the PDCCH and PDSCH in the search space.

In Option 3, the methods of Option 1 and Option 2 may be combined, and the DL Rx beam of the RU may be configured accordingly. Specifically, the DL Rx beam of the RU may be aligned with a beam of the search space in which the MT receives the side control information or aligned with the Rx beam of the MT related to the PDSCH where the side control information is received. In this case, there may be differences in the change of the DL Rx beam of the RU depending on whether the side control information is indicated through the search space or over the PDSCH. For example, the timing for the change of the DL Rx beam of the RU may differ when the side control information is indicated through the search space and when the side control information is indicated over the PDSCH. For example, when the side control information is indicated through the search space, the DL Rx beam of the RU may be changed after a specific time offset which is indicated (or pre-agreed). When the side control information is indicated over the PDSCH, the DL Rx beam of the RU may be changed starting from a pre-agreed time (e.g., from the starting time resource of the next subframe). Alternatively, when the side control information is indicated through the search space, the DL Rx beam of the RU may be changed only for specific time resources that is indicated (or pre-agreed). When the side control information is indicated over the PDSCH, the DL Rx beam of the RU may be changed starting from the pre-agreed time.

Alternatively, in Options 1 to 3, the Rx beam of the RU is described as the beam for receiving DL signals/channels on the backhaul link. However, as mentioned above, not only the change of the DL Rx beam for the backhaul link but also the change of the UL Tx beam may be considered to be indicated. In other words, the methods proposed in Options 1 to 5 may be interpreted as indicating the change for both the DL Rx beam of and UL Tx beam of the RU. In other words, there may not be an independent beam reporting for the beam of the RU, and the beam of the RU may be aligned with the beam of the MT. Additionally, the QCL relationship (relation) between the Tx and Rx beams of the MT may be applied in the same way to the Tx and Rx beams of the RU. For example, when the gNB informs the MT of the change of the beam of the RU through a CORESET ID (and/or BWP ID), the DL Rx beam of the RU may be aligned with the Rx beam of the MT corresponding to the indicated CORESET ID (and/or BWP ID), and it may be aligned with the Tx beam of the MT corresponding to the indicated CORESET ID (and/or BWP ID).

Alternatively, in the indication of the DL Rx beam and UL Tx beam of the RU, time offset information such as the number of slots may also be included. For example, if the gNB indicates the Rx beam and k slots together, the gNB may expect that the DL Rx beam and UL Tx beam of the RU will switch to the indicated direction after the k slots from the indication based on the MT. Alternatively, even if the time offset information on the number of slots is not indicated, the change to the indicated DL Rx beam and UL Tx beam of the RU may be applied starting from a specific time based on a prior agreement or promise. For a slot offset (included in the time offset information), a specific operation may be agreed upon as the default behavior. If the slot offset is not indicated, the default behavior is performed, and if the slot offset is indicated, an indicated operation is performed. For example, when the slot offset is indicated, the indicated DL Rx beam and UL Tx beam of the RU may be applied for a time duration corresponding to the indicated slot offset from a pre-agreed time. For example, if the change of the DL Rx beam and UL Tx beam of the RU and a time offset of k (k slots/subframes/symbols) are indicated together, the DL Rx beam and UL Tx beam of the RU may be set to the indicated beam (or beam direction) for the time duration corresponding to the time offset of k (k slots/subframes/symbols) from the pre-agreed time. After this time duration, the beams may be set to the DL Rx beam and UL Tx beam of the RU before the indication or to pre-agreed default beams.

Alternatively, independently of the indication of the DL Rx beam of the RU, the direction of the Tx beam of the MT, which is applied when transmitting a specific signal/channel, may be indicated as the UL Tx beam of the RU. In other words, to indicate the change of the UL Tx beam of the RU, if the gNB indicates the MT with a specific RACH preamble or RACH occasion through the side control information, the UL Tx beam of the RU may be aligned with the UL Tx beam of the MT during transmission of the RACH preamble or RACH occasion. Alternatively, to indicate the change of the UL Tx beam of the RU, if the gNB indicates the MT with a specific SRI for the MT through the side control information, the UL Tx beam of the RU may be aligned with the UL Tx beam of the MT used or applied during transmission of an SRS corresponding to the specific SRI.

### 3. Scenario 3 - Based on beam currently applied to MT

In relation to Scenario 3, the gNB may expect the Tx/Rx beam currently applied to the MT to be aligned with the Tx/Rx beam of the RU, or the gNB may indicate that the Tx/Rx beam of the MT and the Tx/Rx beam of the RU are aligned. In this case, the gNB may expect that the Tx/Rx beam of the MT in the most recent slot (or symbol) where the MT performs transmission/reception before an (n-k)-th slot will be aligned with the Tx/Rx beam of the RU in the n-th slot. Here, a time offset of k may be in units of slots or symbols. Scenario 3 may also be applied after the indication of the change of the Tx/Rx beam of the RU in Scenario 1 or Scenario 2. In other words, when the change of the Tx/Rx beam of the RU is explicitly/implicitly indicated through side control information, the gNB may expect that the indicated Tx/Rx beam of the RU will be applied within a specific time duration.

Alternatively, the gNB may expect that a beam corresponding to the most recent TCI state ID indicated to the MT will be aligned with the DL Rx beam (and/or UL Tx beam) of the RU. In other words, the NCR may determine that the DL Rx beam of the RU is indicated to change to the beam corresponding to the most recent TCI state ID indicated to the MT. Here, the most recent TCI state ID indicated to the MT may refer to the TCI state ID configured for scheduling a PDCCH and/or PDSCH.

Additionally, the most recent TCI state ID indicated to the NCR or MT may be defined as follows.

1) Firstly, the most recent TCI state ID may refer to a TCI state ID that is successfully received by the NCR or MT. In other words, the most recent TCI state ID may refer to the TCI state ID of a PDSCH indicated by the gNB to the NCR or MT. Alternatively, the most recent TCI state ID may refer to the TCI ID of a PDCCH that the NCR or MT most recently monitors, or the TCI ID of a PDCCH detected by the NCR or MT.

In other words, when the gNB indicates the NCR or MT to receive a PDCCH (or PDSCH) (i.e., when the gNB schedules the PDCCH (or PDSCH)), the gNB may expect that the DL Rx beam (and/or UL Tx beam) of the RU will be aligned with the beam of the MT corresponding to a TCI state ID (or the unified TCI state ID) scheduled to the MT for the PDCCH (or PDSCH). In this case, the MT may inform the gNB via HARQ feedback that the MT receives scheduling information on the PDSCH (or PDCCH).

Alternatively, since the gNB is incapable of knowing whether a signal scheduling the PDSCH (or PDCCH) containing the TCI state ID is received by the MT, operations based on a prior agreement/promise in relation to the reception of the scheduling signal may be performed. For example, the NCR or MT may change the DL Rx beam (and/or UL Tx beam) of the RU based on the TCI state ID of the most recently scheduled PDSCH (or PDCCH). Alternatively, the NCR or MT may change the DL Rx beam (and/or UL Tx beam) of the RU based on the TCI state ID of the most recently monitored (or detected) PDCCH. In this case, the timing for the change of the DL Rx beam (and/or UL Tx beam) of the RU based on the TCI state ID may be at or after the time when the NCR or MT transmits to the gNB a HARQ signal for the PDSCH or PDCCH scheduled by the scheduling signal. Alternatively, without such a HARQ feedback procedure, it may be assumed that the NCR or MT will always correctly receive the PDSCH (or PDCCH) containing the TCI state ID. In this case, the NCR or MT may change the beam of the RU to the beam corresponding to the TCI state ID within or after a specific time after receiving (detecting, or monitoring) the PDSCH (or PDCCH).

In a certain scenario discussion (RAN1#109-e meeting), it has been discussed that the same TCI state as the TCI states configured for operations of the NCR-MT may also be applied to the backhaul link (NCR-Fwd link) to indicate beams to the backhaul link. In this case, it is necessary to further define which of the multiple TCI states configured for the NCR-MT will be applied for DL Rx of the backhaul link (NCR-Fwd link).

- First, it may be assumed that the TCI state applied to the backhaul link (NCR-Fwd link) on a specific time resource is always the same as the TCI state applied to the NCR-MT on the specific time resource. In this case, it is necessary to further define a method of determining the TCI state applied to the backhaul link (NCR-Fwd link) on time resources where the NCR-MT is not performing DL Rx.
- Alternatively, the TCI state applied to the NCR-Fwd link may be configured/determined independently of the TCI state currently applied to the NCR-MT. In this case, it is necessary to clearly define what the TCI state applied to the backhaul link (NCR-Fwd link) is.

Additionally, a method of determining the beam direction applied to the UL Tx beam for the backhaul link (NCR-Fwd link) needs to be defined. Considering that UL for the control link and UL for the backhaul link (NCR-Fwd link) are time-division multiplexed (TDMed), it may not be appropriate to determine the UL Tx beam of the backhaul link (NCR-Fwd link) solely based on the UL Tx beam of the control link.

Considering this issue, the following methods may be considered to determine the beam of the backhaul link (NCR-Fwd link) independently of time resources where the NCR-MT is not performing transmission/reception or independently of the beam applied to the NCR-MT.

- The beam direction applied to the backhaul link (NCR-Fwd link) may be explicitly indicated.
- The beam direction applied to the backhaul link (NCR-Fwd link) may be determined/configured based on a beam used by the NCR-MT for transmitting and receiving a specific signal/channel.
- The beam direction applied to the backhaul link (NCR-Fwd link) may be determined/configured based on the most recent beam applied by the NCR-MT for transmission and reception.

Based on these methods, the following methods may be further considered.

- When the NCR-MT performs transmission/reception operations on specific time resources, the beam direction (e.g.,

TCI state) applied to the NCR-MT may be applied for the transmission/reception operation of the backhaul link (NCR-Fwd link). For example, for specific time resources where transmission/reception of signals on the backhaul link and transmission/reception of signals on the control link are performed simultaneously, the direction of the UL/DL Tx/Rx beam for the backhaul link may be applied/configured as the beam direction applied to the NCR-MT.

- When the NCR-MT does not perform transmission/reception operations on specific time resources, the beam direction for the transmission/reception operation on the backhaul link (NCR-Fwd link) may be determined/configured as the beam direction indicated/configured according to Scenario 1 or Scenario 2 described above.

Hereinafter, the following methods will be explained in detail: a method of determining a specific time resource or specific time duration where transmission/reception of signals on the backhaul link and transmission/reception of signals on the control link are performed simultaneously; and a method of determining the direction of the UL/DL Tx/Rx beam for the backhaul link on the specific time resource.

**Simultaneous operation between control link and backhaul link**

As mentioned above, the beam of the backhaul link of the NCR may be configured/determined based on different indication methods, depending on whether the simultaneous operation occurs between the control link and backhaul link. In relation to the configuration/determination, the gNB and NCR may need a criterion to determine/define a time duration considered for the simultaneous operation between the control link and backhaul link. For example, even if the gNB transmits an SSB, CSI-RS, etc., time resources where the NCR-MT does not perform (downlink signal) reception (or the time resources where monitoring is not performed) may be determined as a time duration where the simultaneous operation between the control link and backhaul link is not performed (i.e., non-simultaneous operation time duration). Alternatively, a time duration or time resources where the gNB transmits an SSB, CSI-RS, etc., may be considered as a time duration for the simultaneous operation between the control link and backhaul link, even if the NCR-MT does not perform reception. In the determination of the time duration considered for the simultaneous operation between the control link and backhaul link, it is not clearly defined whether the actual reception operation of the NCR is necessary. Therefore, it is necessary to resolve/prevent any misunderstanding/ambiguity in indicating the beam of the backhaul link (NCR-Fwd link) between the gNB and NCR. To this end, the time duration where the simultaneous operation between the control link and backhaul link (or between the NCR-MT and NCR-Fwd) is performed needs to be clearly defined. In other words, when the gNB transmits a DL signal/channel, but the NCR-MT does not perform the reception of the DL signal from the gNB, an additional definition may be needed to resolve any ambiguity regarding whether the simultaneous operation between the gNB and NCR is performed.

Hereinafter, methods to resolve the aforementioned ambiguity will be explained in detail. The simultaneous operation of the NCR is assumed and described as a criterion for selecting the beam of the backhaul link (NCR-Fwd link), but the simultaneous operation of the NCR may also be considered as a criterion for other indications (e.g., indications of the access link of the NCR-Fwd, ON/OFF operations of the NCR, power control of the NCR-Fwd, etc.). Thus, the simultaneous operation between the NCR-MT and NCR-Fwd may be considered for both DL and UL operations, or the simultaneous operation may be considered for either DL or UL. For example, if the gNB determines that there is no simultaneous UL transmission capability between the NCR-Fwd and NCR-MT based on signaling of capability information regarding the simultaneous operation between the NCR-Fwd and NCR-MT, the simultaneous operation may be determined based only on the DL operation. Alternatively, if the capability information related to the simultaneous operation between the NCR-Fwd and NCR-MT is for both the DL and UL operations, the gNB may determine the simultaneous operation for each of the UL and DL operations and configure/indicate the beam for the backhaul link, based on the capability information. In this case, the MT or NCR may distinguish time durations for DL and UL based on a time domain resource configuration received through RRC/MAC-CE/DCI, and the definition of the simultaneous operation may be applied differently for each time duration.

For DL (i.e., for time resources determined by the NCR-MT as a DL time duration), a time duration where the simultaneous operation of the NCR is performed may be defined as a time duration where the DL reception operation of the gNB is performed via the control link. In this case, the following alternatives may be considered.

For convenience of explanation, the simultaneous operation of the NCR-MT and NCR-Fwd (in the time domain) will be defined and explained as the simultaneous operation of the NCR or the simultaneous operation.

1. Time duration of simultaneous operation related to reception of DL signal/channel

Hereinafter, methods of determining/defining a time duration where the simultaneous operation of the NCR is performed in relation to reception of DL signals/channels will be explained in detail.

(1) Alternative 3-1

Regarding the determination of the simultaneous operation of the NCR according to Alternative 3-1, the NCR may determine only time resources where a specific DL signal/channel is received from the gNB as a time duration or time resources for the DL reception operation of the NCR-MT (or reception operation for the control link). The specific DL signal/channel may be defined as at least one of the following signals/channels.

- PDSCH
- Search space for PDCCH monitoring (however, specific search spaces such as a type-0 CSS may be excluded from the search space for PDCCH monitoring)

As the beam of the NCR-Fwd (the beam of the backhaul link or the Rx beam of the backhaul link), the NCR may set the beam used by the NCR-MT to receive the DL signal/channel (the beam of the control link or the Rx beam of the control link) on time resources where the signal/channel is transmitted/received. In this case, for the remaining time resources among the DL time resources of the NCR-MT, except for the time resources where the specific DL signal/channel is transmitted, the NCR may assume that the NCR-MT is not receiving the specific DL signal/channel and determine the remaining time resources as a time duration where the NCR-Fwd operations are only performed. In other words, the NCR may assume that the DL reception operation of the NCR-MT is not performed on the remaining time resources. Alternatively, whether the NCR-MT performs the DL reception operation on the remaining time resources may be determined based on the simultaneous operation capability of the NCR. For example, if the NCR-MT has the simultaneous operation capability, the gNB may assume that the NCR-Fwd and NCR-MT may perform simultaneous reception on the remaining time resources. However, if the NCR-MT has no simultaneous operation capability and the NCR-Fwd operates on the remaining time resources, the gNB may assume that the NCR-MT does not operate on the remaining time resources.

Alternatively, the NCR may determine only time resources where reception of a UE-specific DL signal/channel is performed/attempted as time resources where the NCR-MT performs DL reception through the control link.

Accordingly, the NCR may determine the beam direction applied to the control link on the time resources where the NCR-MT performs DL reception through the control link as the beam direction of the backhaul link of the NCR-Fwd. The NCR may determine/configure the beam direction of the backhaul link based on the indicated beam direction on the remaining time resources, according to the aforementioned explicit/implicit rule (Scenario 1 and Scenario 2). If the NCR-Fwd performs forwarding operations on the remaining time resources and the beam applied to the control link is different from the beam applied to the backhaul link, the NCR may not perform DL reception via the control link.

(2) Alternative 3-2

In Alternative 3-2, the NCR-MT may determine time resources where the serving cell is scheduled/configured to transmit a DL signal/channel as time resources where DL reception via the control link is performed, even if the NCR-MT does not perform actual DL reception.

Such specific DL signals/channels (DL signals/channels transmitted by the serving cell) may include at least one of the following signals/channels.

- Search space for PDCCH monitoring (however, specific search spaces such as a type-0 CSS may be excluded from the search space for PDCCH monitoring).
- PDSCH
- CSI-RS
- SIB1
- SS/PBCH block (e.g., ssb-PositionsInBurst in SIB1 or ssb-PositionsInBurst in ServingCellConfigCommon

In other words, to monitor time resources where the NCR-MT actually receives a DL signal (or first time resource) as described in Alternative 3-1 and monitor reception of signals/channels from the serving cell, the gNB and NCR may assume/determine that the simultaneous operation is performed on time resources configured for the NCR-MT (or second time resources). Specifically, for the second time resource, the gNB may assume/determine that the time resources where the NCR-MT is expected to monitor and/or time resources configured for future monitoring will be considered as the time duration where the simultaneous operation is performed, regardless of whether the NCR-MT actually performs the reception operation of the signal/channel.

Alternatively, the gNB may assume/determine that the simultaneous operation between the NCR-MT and NCR-Fwd is performed on all time resources configured for the NCR-MT. For example, the gNB may assume that the simultaneous operation between the NCR-MT and NCR-Fwd is performed on (all) time resources configured for the NCR-MT, such as a search space for PDCCH monitoring, a PDSCH, a CSI-RS, an SSB, etc. For instance, regardless of whether the NCR-MT actually receives the signal, the gNB and NCR may assume/determine that the simultaneous operation between the NCR-MT and NCR-Fwd is performed on the time resources configured by the gNB to transmit cell-specific signals/channels.

The NCR may determine that, for the time resources where the simultaneous operation is performed, as determined in Alternative 3-2, the NCR-Fwd set the beam direction of the backhaul link to the beam direction used/applied by the NCR-MT to receive the corresponding signal/channel. Alternatively, the beam direction of the NCR-Fwd on the time resources where the simultaneous operation is performed may be configured based on the indication from the gNB, or the beam direction of the NCR-Fwd (or backhaul link) during the time duration where the simultaneous operation is performed may be configured based on a prior agreement.

For the time resources where the simultaneous operation is determined to be performed, the NCR may determine a beam corresponding to the beam for the control link of the NCR-MT as the beam of the backhaul link (e.g., DL beam), even if the DL signal reception via the control link is not performed on the second time resources. For the remaining time resources except for the above time resources, the beam of the backhaul link may be configured/determined according to an explicit/implicit indication (based on at least one of the alternatives in Scenario 1 and/or Scenario 2).

2. Time duration of simultaneous operation related to transmission of UL signal/channel

Regarding transmission of UL signals/channels, a time duration where the NCR performs the simultaneous operation may be determined/defined as time resources for performing UL transmission to the gNB through the control link.

(1) Alternative 4-1

In Alternative 4-1, the time resources/time duration related to the simultaneous operation may be determined as time resources scheduled/configured by the gNB for actual transmission of UL signals such as a PRACH, a PUSCH, a PUCCH, etc. for the NCR-MT. In other words, the NCR may configure/determine the UL Tx beam of the NCR-Fwd to align with the UL Tx beam of the NCR-MT on the time resources configured for the actual transmission of the UL signals/channels. For example, the time resources configured/scheduled for the actual transmission of the UL signals may be time resources for a PUSCH and/or PUCCH scheduled by DCI received from the gNB. Meanwhile, the NCR may determine that the remaining time resources, excluding the time resources scheduled/configured for the actual transmission of the UL signals for the NCR-MT, are time resources where the simultaneous operation is not performed.

Alternatively, for the remaining time resources (e.g., the remaining time resources excluding the time resources configured for the transmission of the UL signals/channels in a UL time duration indicated by a TDD configuration for the NCR-MT), the NCR may assume that the UL Tx of the NCR-MT (or the UL Tx via the control link) is not performed and may determine/configure the UL Tx beam of the backhaul link (NCR-Fwd link). Alternatively, a method for configuring the UL Tx beam of the backhaul link (NCR-Fwd link) may vary depending on the simultaneous operation capability of the NCR (i.e., the capability to simultaneously transmit on both the control link and the backhaul link (NCR-Fwd link)). For example, if the NCR does not have the simultaneous operation capability, the NCR may determine that the transmission operation on the backhaul link is performed on the remaining time resources, excluding the time resources where a PUSCH and PUCCH configured for the control link (or the NCR-MT) are transmitted. For the remaining time resources, the NCR may configure/determine the indicated beam direction as the direction of the UL Tx beam of the backhaul link according to Scenario 1 and/or Scenario 2.

(2) Alternative 4-2

In Alternative 4-2, the time duration for performing the simultaneous operation may be determined by considering time resources configured for UL transmission through the control link, even if the actual UL transmission for the NCR-MT is not performed. In other words, the time duration for performing the simultaneous operation may be determined as the time resources configured for the actual UL transmission for the NCR-MT as described in Alternative 4-1 and time resources configured for UL transmission to the serving cell. In other words, the gNB and NCR may assume/determine that the simultaneous operation of the NCR will be performed on the time resources configured for the actual UL transmission for the NCR-MT as described in Alternative 4-1 and the time resources configured for the UL transmission to the serving cell. For example, the time resources configured for the UL transmission to the serving cell may be time resources configured through SSB-to-RO mapping for the NCR-MT and/or time resources configured for transmission of a contention-based RACH.

In this case, the NCR may configure/determine the UL Tx beam of the backhaul link (NCR-Fwd) to align with the UL Tx beam of the control link (NCR-MT) on the time duration where the simultaneous operation is performed, which is determined by Alternative 4-2. Alternatively, the beam direction of the backhaul link (NCR-Fwd) may be configured on the time resources where the simultaneous operation is performed, according to the indication from the gNB, or the beam direction of the backhaul link (NCR-Fwd) for the time duration where the simultaneous operation is performed may be configured based on a prior agreement.

For the remaining time resources, excluding the time resources configured/scheduled by the gNB for actual transmission of UL signals such as a PRACH, a PUSCH, a PUCCH, etc. for the control link (NCR-MT) and the time resources configured for UL signal transmission to the serving cell, the NCR may determine that the simultaneous operation is not performed on the remaining time resources. In this case, the NCR may not align the beam of the control link (NCR-MT) with the beam of the backhaul link (NCR-Fwd) on the remaining time resources.

Hereinafter, methods of configuring the on/off state of the forwarding operation of the NCR will be explained in detail.

The ON-OFF state of the NCR may be defined/determined in certain scenarios as shown in Table 18 and/or Table 19 below.

[Table18]

| |
|---|
| The NCR-Fwd is **always** expected to be "OFF" **unless otherwise explicitly or implicitly** by gNB. |
| - Note-1: This applies to the case regardless of the RRC state of NCR-MT. |
| - Note-2: indication (e.g., received when NCR-MT in RRC-connected) or DRX state of NCR-MT to control the ON-OFF behavior of NCR-Fwd when the NCR-MT is in RRC-idle/inactive is not precluded. |
| The above is not meant to imply any signalling design for NCR-Fwd ON-OFF. |

[Table 19]

| |
|---|
| For FR2, the "ON" state of NCR-Fwd is indicated: |
| - Alt-2: Implicit indication via the beam indication (i.e., if there is beam indication, the NCR is assumed to be ON over the indicated time domain resource associated with corresponding beam(s)) |
| For FR1, the "ON" state of NCR-Fwd is indicated: |
| Alt-2: Indication via the beam indication (i.e., if there is beam indication, the NCR is assumed to be ON over the indicated time domain resource associated with corresponding beam(s)) |
| - When there is only one beam, the sole purpose of the beam indication is for indicating "ON" state of NCR-Fwd |

Additionally, the beam for the backhaul link (NCR-Fwd) may be indicated as shown in Table 20.

[Table 20]

| |
|---|
| If adaptive beams are adopted for C-link and backhaul link, new signaling is supported to indicate a beam(s) used for backhaul link from the set of beams for C-link. |
| - Predefined rule is used to define the beam in case there is no indication via the new signalling |
| -- FFS: Details of the predefined rule |
| -- FFS: Application of predefined rule for other cases |
| - Note: The beam(s) used for backhaul link should be from the RRC-configured list of beams for C-link. |
| - The new signalling, if needed, is an optional NCR capability |
| The semi-static beam indication for backhaul link is supported as: |
| - If the beam indication framework in Rel-15 is used for NCR-MT |
| - The DL beam is indicated by MAC CE to select one of TCI state ID from the RRC-configured list of beams for C-link |
| -- The UL beam is indicated by SRI on C-link via MAC CE. |
| - If the beam indication framework in Rel-17 is used for NCR-MT |
| -- The DL and UL beam are indicated by MAC CE to select one of TCI state ID from the RRC-configured list of beams for C-link |
| The following pre-defined rules are applied to determine the beam for backhaul link: |
| - In the time domain resource with simultaneous downlink reception or uplink transmission in C-link and backhaul link, the beam of backhaul link is the same as the beam of C-link regardless whether there is beam indicated by the dedicated signal for backhaul link. |

| |
|---|
| - In the time domain resource without simultaneous downlink reception or uplink transmission in C-link and backhaul link, if the NCR does not support capability with the new signalling for backhaul beam indication or if no beam is indicated for backhaul link by the dedicated signal,<br>-- When Rel-15/16 beam indication framework is used for C-link,<br>--- The beam determined by QCL assumption for CORESET with the lowest ID and spatial relationship for PUCCH with lowest PUCCH resource ID in the C-link is applied for the DL and UL of backhaul link, respectively.<br>-- When Rel-17 beam indication framework (i.e., unified TCI framework) is used for C-link, the indicated unified TCI for C-link DL and UL is applied for the DL and UL of backhaul link, respectively.<br>Otherwise, the beam indicated by the dedicated signalling is applied for backhaul link. |

Based on what is defined in Table 20, the method for configuring/applying the beam of the backhaul link of the NCR may be summarized as follows.

- The NCR may apply/configure a beam corresponding to the beam of the C-link (applied/used) during a time duration where the simultaneous operation is performed between the control link (C-link) and the backhaul link (Fwd-link) as the beam of the Fwd-link.
- If the indication of an independent beam direction for the backhaul link is not supported (i.e., if the NCR does not support an adaptive beam for the backhaul link), the NCR may determine/apply the beam of the backhaul link based on predefined rules (e.g., DL beam according to QCL of CORESET 0, control link beam corresponding to PUCCH resource ID 0) for the time duration where the simultaneous operation between the control link and the backhaul link is not performed (non-simultaneous operation timer duration).
- If the indication of an independent beam direction for the backhaul link is supported (i.e., if the NCR does not support an adaptive beam for the backhaul link), and if no beam for the backhaul link is indicated by the gNB through a MAC-CE, the NCR may determine/apply the beam of the backhaul link based on predefined rules (e.g., DL beam according to QCL of CORESET 0, control link beam corresponding to PUCCH resource ID 0) for the time duration where the simultaneous operation between the control link and backhaul link is not performed (non-simultaneous operation time duration).
- If the indication of an independent beam direction for the backhaul link is supported (i.e., if the NCR supports an adaptive beam for the backhaul link), and if the beam for the backhaul link is indicated by the gNB through a MAC-CE, the NCR may determine/apply an indicated DL beam (e.g., DL beam indicated based on a TCI state ID) and an indicated UL beam (e.g., UL beam indicated based on an SRI) as the beam of the backhaul link for the backhaul link during the time duration where the simultaneous operation is not performed (non-simultaneous operation time duration).

In relation to the application of the method of configuring the beam of the backhaul link, two types of NCR are additionally considered. Here, the two types of NCR are: an NCR that does not support the indication of backhaul link beam (i.e., NCR that does not support an adaptive beam for the backhaul link); and an NCR that supports the indication of the backhaul link beam (i.e., NCR that supports an adaptive beam for the backhaul link). Hereinafter, the application methods for configuring the beam of the backhaul link for each type of NCR will be explained in detail.

FIG. 10 is a diagram for explaining a method for configuring a beam of a backhaul link based on whether a backhaul link beam indication and a simultaneous operation are performed.

First, the NCR in capable of receiving the backhaul link beam indication (i.e., NCR that does not support an adaptive beam for the backhaul link) may be considered. In this case, since the application of predefined rules related to the beam of the backhaul link is determined based on whether the simultaneous operation is performed, if there is a clear understanding regarding the time duration during which the simultaneous operation is performed between the NCR and gNB, there may be no confusion or ambiguity in the configuration of the beam of the backhaul link of the NCR.

Secondly, the NCR capable of receiving the backhaul link beam indication (i.e., NCR that supports an adaptive beam for the backhaul link) may be considered. In this case, the beam applied to the backhaul link of the NCR may vary depending on whether the simultaneous operation is performed and whether the backhaul link beam indication is received. Therefore, if there is a clear understanding regarding the time duration during which the simultaneous operation is performed between the NCR and gNB, the NCR may clearly configure the beam of the backhaul link. However, if the simultaneous operation status of the NCR and the reception of the backhaul link beam indication change sequentially, the application/configuration of the backhaul link beam in the NCR may become ambiguous.

Referring to FIG. 10, after receiving the backhaul link beam indication, the NCR configures the backhaul link beam during a time duration where the simultaneous operation is not performed. When the time duration for the simultaneous operation starts, the NCR may reconfigure the beam of the backhaul link during a time duration where the simultaneous operation is not performed after configuring the beam of the backhaul link to a beam applied to the control link instead of the indicated beam from the backhaul link beam indication. Specifically, when the NCR capable of receiving the backhaul link beam indication (i.e., NCR that supports an adaptive beam for the backhaul link) receives the indication of the beam for the backhaul link during the time duration where the simultaneous operation is not performed, the NCR may apply/configure the indicated beam as the beam of the backhaul link during the time duration where the simultaneous operation is not performed. Subsequently, for the time duration where the simultaneous operation is performed, the NCR may apply/configure the beam of the control link as the backhaul link beam. After the time duration, if the time duration where the simultaneous operation is not performed starts, the NCR may face ambiguity regarding whether to apply the indicated backhaul link beam as the valid backhaul link beam before the time duration for the simultaneous operation.

As shown in FIG. 10, when the NCR performs the beam configuration for the backhaul link in the sequence of non-simultaneous operation -> simultaneous operation -> non-simultaneous operation for the control link and Fwd-link, the following two alternatives may be considered as a beam configuration/determination method for the backhaul link during the second time duration for the non-simultaneous operation. The NCR may consider the following cases: a case where the indicated backhaul link beam during the first time duration for the non-simultaneous operation is determined to be indicated during the second time duration for the non-simultaneous operation (Case 1); and a case where the indicated backhaul link beam during the first time duration for the non-simultaneous operation is determined to not be indicated during the second time duration for the non-simultaneous operation (Case 2). Specifically, the following alternatives may be considered for each case:

(1) Alternative 5 -1

The NCR may determine/consider that the indication for the backhaul link beam is valid during the time duration where the non-simultaneous operation is performed until a new beam for the backhaul link is indicated/configured.

In other words, the NCR may consider the existing backhaul link beam indication as valid until a new indication for the backhaul link beam is received. For the time duration where the non-simultaneous operation is performed, the NCR may determine/configure the beam corresponding to the existing backhaul link beam indication as the beam for the backhaul link (corresponding to Case 1). This has the advantage of minimizing the ambiguity in the backhaul link beam indication, while allowing for the configuration of the backhaul link beam over a long duration through a single beam indication. Additionally, Alternative 5-1 has the advantage that no separate indication is needed for time resources related to the application of the beam information based on the backhaul link beam indication.

However, after the beam of the backhaul link is configured during the time duration for the non-simultaneous operation based on the backhaul link beam indication, if the simultaneous operation is performed for a long period of time, and then the non-simultaneous operation starts again, the backhaul link beam indication may become outdated. In this case, if the backhaul link beam is configured according to the backhaul link beam indication during the restarted non-simultaneous operation, the performance of the backhaul link may significantly degrade. Additionally, in Alternative 5-1, once the backhaul link beam indication is received, the NCR may not apply the beam according to the predefined rules from Scenario 1 and Scenario 2 during the time duration where the non-simultaneous operation is performed. In this case, since new indications for the backhaul link beam are needed over time, signaling overhead may increase.

(2) Alternative 5 -2

In Alternative 5-2, information on the indicated beam to be applied to the backhaul link during the time duration where the non-simultaneous operation is performed may only be valid for a specific time duration. Here, the specific time duration may be configured/determined based on the following options.

1) Option 5-1

The specific time duration may be defined as a time duration from the time when the beam information is indicated until the beam of the backhaul link of the NCR is changed based on predefined rules. That is, during the time duration where the non-simultaneous operation is performed, the indicated beam for the backhaul link may no longer be valid from the beginning of the time duration where the simultaneous operation is performed. In other words, the specific time duration is defined as a time duration from when the backhaul link beam is indicated until the simultaneous operation starts. Therefore, Option 5-1 of Alternative 5-2 may be related to Case 2 in FIG. 10.

2) Option 5-2

The backhaul link beam indication may further include information on time resources, similar to an access link beam indication. In this case, the specific time duration may be defined as time duration based on the information about the time resources. For example, the backhaul link beam indication may further include time resource information on at least one of the following: a symbol offset, a slot offset, a duration defined by slot(s), symbol(s), a periodicity, and a reference SCS. The specific time duration may be determined/defined based on the time resource information. On the other hand, if the specific time duration and the time duration for the simultaneous operation overlap, the NCR may determine that the backhaul link beam indication is not valid during the time duration for the simultaneous operation. In other words, during the time duration for the simultaneous operation, the NCR may set the backhaul link beam based on the existing rules (e.g., configuration of the backhaul link beam with the control link beam), regardless of the backhaul link beam indication.

3) Option 5-3

The backhaul link beam indication may be considered valid only for a certain period of time which is determined or agreed upon in advance. In other words, the specific time duration may be defined as the certain period of time starting from the reception of the backhaul link beam indication, which is determined or agreed upon in advance. For example, the backhaul link beam indicated by a MAC-CE may only be valid for a predefined/preconfigured period such as k slots. The value of k slots may be fixed based on a prior agreement or configured by the gNB through RRC/MAC-CE/DCI. If the simultaneous operation starts during the k-slot time duration, the NCR may determine that the backhaul link beam indication is not valid during the time when the simultaneous operation is being performed within the k-slot time duration.
Alternative 5 -2 may eliminate the ambiguity of the backhaul link beam indication, but when the time duration where the non-simultaneous operation is performed is short, the application time of the indicated backhaul link beam may be limited. Nevertheless, the likelihood of the indicated backhaul link beam becoming outdated is significantly lower compared to Alternative 5 -1. Additionally, once the specific time duration has elapsed, the beam of the backhaul link may be continuously updated according to predefined rules (Scenario 1 to Scenario 3). For example, since the indicated beam of the backhaul link may not be applied once the specific time duration has elapsed, the NCR may change and configure the beam of the backhaul link according to the predefined rules after the specific time duration has elapsed. In this case, there is no need to indicate the beam of the backhaul link every time, which may minimize signaling overhead compared to Alternative 5-1.

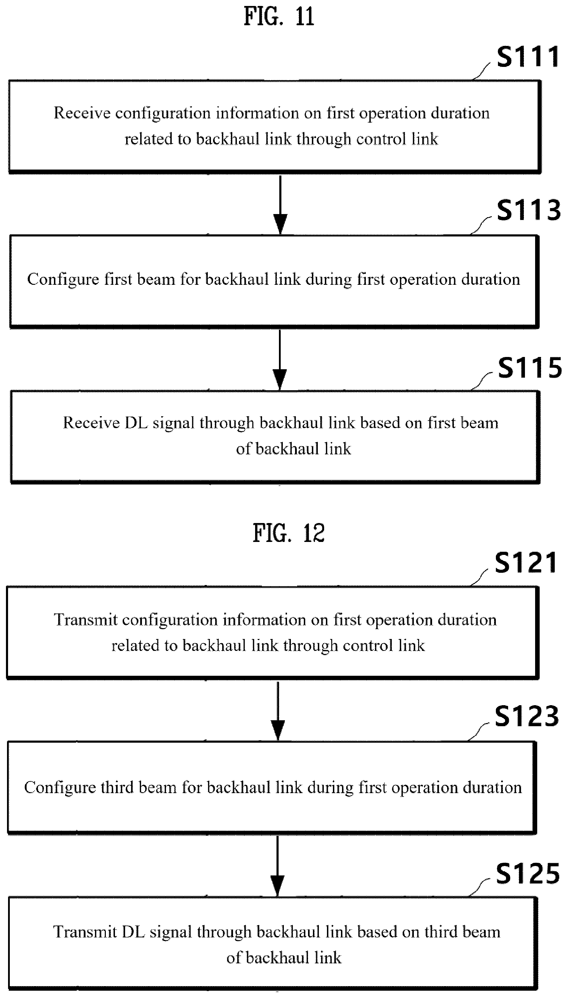

FIG. 11 is a diagram for explaining a method of configuring a beam of a backhaul link by a device having a control link and a backhaul link formed with a BS.
The device may be a device corresponding to an NCR. The device may form the control link with the BS through an NCR-MT and form the backhaul link with the BS through an NCR-Fwd (or NCR-RU). Additionally, the device may form an access link with a UE through the NCR-Fwd. The device may forward or relay a DL signal from the BS received through the backhaul link to the UE via the access link, or the device may forward or relay a UL signal from the UE received via the access link to the BS through the backhaul link. The access link and the backhaul link may be defined as a forwarding link or NCR-Fwd link. In the following, configuring a first beam of the backhaul link is assumed to involve configuring, by the device, an Rx beam, which is a beam for receiving the DL signal through the backhaul link.
Referring to FIG. 11, the device may receive configuration information on a first operation duration related to the backhaul link through the control link (S111). As mentioned above, the configuration information may be included in side control information transmitted by the BS through the control link (to the NCR-MT) for controlling the backhaul link. For example, the device may determine the first operation duration during which an operation of forwarding the DL signal to the UE is performed, based on the configuration information. As explained with reference to Table 18, the first operation duration may be a duration during which an operation of receiving the DL signal (DL signal to be forwarded to the UE) through the backhaul link is performed within a duration during which the forwarding operation through the NCR-Fwd is turned on
Next, the device may configure a first beam of the backhaul link during the first operation duration (S113). Based on Scenarios 1 to 3 mentioned above, the device may set an implicitly/explicitly indicated (DL Rx) beam direction as the first beam (i.e., an Rx beam for the DL signal) for the first operation duration, or the device may set the same beam as a beam configured for the control link as the first beam.
As explained in the section of "determination of simultaneous operation between control link and backhaul link," the device may configure the first beam of the backhaul link by further considering the presence of a simultaneous operation duration where a DL reception operation on the control link and a DL reception operation on the backhaul link are simultaneously performed. For example, if the simultaneous operation duration exists within the first operation duration, the device may set/determine the first beam to be the same as a second beam of the control link used/configured for receiving the DL signal during the simultaneous operation duration. On the other hand, for the remaining operation duration within the first operation duration except for the simultaneous operation duration, the device may set the first beam to the explicitly/implicitly indicated beam direction based on Scenarios 1 to 3 described above.
Therefore, as described above, the device needs to accurately specify/determine the simultaneous operation duration during which the simultaneous operation is performed within the first operation duration in order to configure the direction of the first beam.

Specifically, the device may determine a second operation duration, during which the operation of receiving the DL signal is performed via the control link, based on the configuration information or scheduling information from the BS. As described in the section of "determination of simultaneous operation between control link and backhaul link," the device may determine/specify a first time resource, which is time resources for actually receiving the DL signal via the control link (e.g., time resources for a PDSCH scheduled through DCI included in a PDCCH), and/or time resources configured for monitoring of the DL signal via the control link (for example, time resources where there is a possibility that the DL signal could be received via the control link). For instance, the device may determine/specify the second operation duration based on DCI scheduling the DL signal for the control link or RRC configuration information.

A second time resource may include time resources configured for monitoring at least one of an SSB, SIB1, a CSI-RS, and a PDCCH, which are related to the control link. Alternatively, the second time resource may further include time resources based on SPS configuration information related to the reception of the DL signal.

The device may determine the second operation duration based on the first time resource and the second time resource. In this case, the device may determine the second operation duration by considering not only the first time resource where the actual DL signal reception via the control link is performed, but also the second time resource, which has the possibility of receiving the DL signal through the control link (where monitoring of the DL signal is required). For example, the device may include the second time resource in the second operation duration, by considering that monitoring of the DL signal is performed even if the DL signal is not actually received on the second time resource via the control link.

In this case, the device may configure the first beam separately for the remaining operation duration within the first operation duration except for the simultaneous operation duration and the simultaneous operation duration. For example, as explained with reference to FIG. 10, for the remaining operation duration, the device may set the first beam to one beam determined according to predefined rules among the beam indicated by the BS and/or multiple beams for the control link. The device may set the first beam to be the same as the second beam configured for receiving the DL signal via the control link during the simultaneous operation duration.

Alternatively, as explained in the section of "determination of simultaneous operation between control link and backhaul link," the device may receive indication information on the beam of the backhaul link during the first operation duration. The device may configure the first beam of the backhaul link based on the indication information during the remaining operation duration within the first operation duration except for the simultaneous operation duration. During the simultaneous operation duration, the device may set the first beam to be the second beam of the control link for the simultaneous operation duration, which is not based on the indicated information,

Next, the device may receive the DL signal through the backhaul link using the first beam of the backhaul link (S115). The device may transmit/forward the received DL signal to the UE through the access link formed with the UE. For example, if the device receives the DL signal via the backhaul link during the simultaneous operation duration, the device may set the beam direction of the backhaul link to match the beam direction of the control link configured for the simultaneous operation duration and then receive the DL signal via the backhaul link.

FIG. 12 is a diagram for explaining a method of configuring a beam of a backhaul link by a BS having a control link and a backhaul link with a device.

Referring to Figure 12, the BS may transmit configuration information on a first operation duration related to the backhaul link to the device through the control link (S121). As mentioned above, the configuration information may be included in side control information transmitted by the BS to an NCR-MT via the control link for controlling the backhaul link. For example, the BS may transmit the configuration information to indicate/configure the first operation duration during which the device forwards a DL signal to the UE.

Next, the BS may configure a third beam for the backhaul link during the first operation duration (S123). Based on Scenarios 1 to 3 described above, the BS may set a Tx beam direction corresponding to the Rx beam direction of the DL signal, which is implicitly/explicitly indicated, to the third beam (i.e., the Tx beam of the DL signal). Alternatively, the BS may set the third beam to be the same as the Tx beam configured for the control link

As explained in the section of "determination of simultaneous operation between control link and backhaul link," the BS may configure the third beam of the backhaul link by further considering the presence of a simultaneous operation duration where a DL transmission operation on the control link and a DL transmission operation on the backhaul link are simultaneously performed. For example, if the simultaneous operation duration exists within the first operation duration, the BS may set/determine the third beam to be the same as the Tx beam of the control link used/configured for transmitting the DL signal during the simultaneous operation duration. On the other hand, for the remaining operation duration within the first operation duration except for the simultaneous operation duration, the BS may set a Tx beam direction corresponding to an explicitly/implicitly indicated (Rx) beam direction described in Scenarios 1 to 3 as the third beam.

Therefore, as described above, the BS needs to accurately specify/determine the simultaneous operation duration during which the simultaneous operation is performed within the first operation duration in order to configure the direction of the first beam.

As described in the section of "determination of simultaneous operation between control link and backhaul link," the BS may determine/specify a first time resource, which is time resources for a PDSCH scheduled through DCI included in a PDCCH, and/or time resources configured for monitoring of the DL signal via the control link (for example, time resources where there is a possibility that the DL signal will be transmitted to the device via the control link). For instance, the BS may determine/specify a second operation duration based on DCI scheduling the DL signal for the control link or RRC configuration information.

A second time resource may include time resources configured for monitoring at least one of an SSB, SIB1, a CSI-RS, and a PDCCH, which are related to the control link. Alternatively, the second time resource may further include time resources based on SPS configuration information related to the transmission of the DL signal.

The BS may determine the second operation duration based on the first time resource and the second time resource. In this case, the BS may determine the second operation duration by considering not only the first time resource where the actual DL signal transmission via the control link is performed, but also the second time resource, which is the time resources configured for monitoring the DL signal. For example, if the BS transmits the DL signal, which is to be monitored, on the second time resource, the BS may determine the second time resource as the second operation duration where the reception operation via the control link is to be performed, regardless of whether the device actually receives the DL signal.

Next, the BS may transmit the DL signal through the backhaul link using the third beam of the backhaul link (S125). Here, the DL signal may be the signal that the device forwards or transmits to the UE.

According to the proposed disclosure, it is possible to clearly define/specify the simultaneous operation duration during which the device performs signal transmission and reception operations through the control link and backhaul link simultaneously. By clearly specifying the simultaneous operation duration, ambiguity in the beam configuration of the backhaul link between the device, which is the NCR, and the BS may be resolved. Additionally, by clearly defining the time duration during which the indication information indicating the beam of the backhaul link is applied, the beam of the backhaul link may be effectively updated according to predefined rules.

## Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

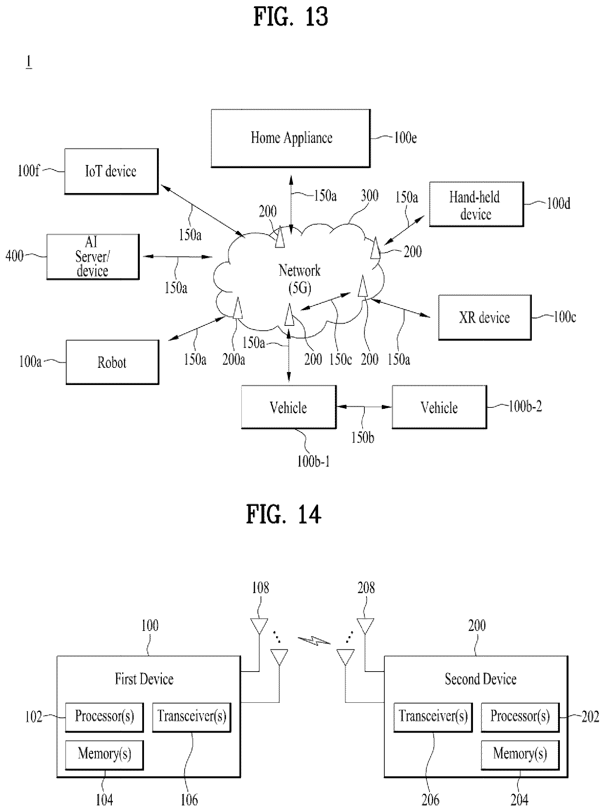

FIG. 13 illustrates a communication system applied to the present disclosure.

Referring to FIG. 13, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Examples of wireless devices to which the present disclosure is applied

FIG. 14 illustrates a wireless device applicable to the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

For example, the first wireless device 100 or a device may include the processor(s) 102 connected to the RF transceiver(s) 106 and the memory(s) 104. The memory(s) 104 may include at least one program capable of performing operations related to the embodiments described in FIGS. 9 to 11.

Specifically, the processor(s) 102 may control the RF transceiver(s) 106 to receive information on a first operation duration for DL reception through a backhaul link; configure a first beam of the backhaul link for the first operation duration; and receive a DL signal to be forwarded to a UE from a BS based on the first beam of the backhaul link. Based on that a second operation duration for receiving the DL signal through a control link overlaps with the first operation duration on at least one time resource, the first beam of the backhaul link may be set to a same beam as a second beam of the control link for the at least one time resource. The second operation duration may include a first time resource allocated through DCI and a second time resource configured to monitor the DL signal.

Alternatively, there is provided a processing device configured to control a device having a control link and a backhaul link formed with a BS having the processor(s) 102 and the memory(s) 104. In this case, the processing device includes at least one processor; and at least one memory connected to the at least one processor and storing instructions that, based on execution by the at least one processor, cause a UE to: receive information on a first operation duration for DL reception through the backhaul link; configure a first beam of the backhaul link for the first operation duration; and receive a DL signal to be forwarded to a UE from the BS based on the first beam of the backhaul link. Based on that a second operation duration for receiving the DL signal through a control link overlaps with the first operation duration on at least one time resource, the first beam of the backhaul link may be set to a same beam as a second beam of the control link for the at least one time resource. The second operation duration may include a first time resource allocated through DCI and a second time resource configured to monitor the DL signal.

Alternatively, a non-transitory computer-readable storage medium having recorded thereon instructions for executing the proposed methods described with reference to FIGS. 9 to 11 may be configured.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

Examples of application of wireless devices to which the present disclosure is applied

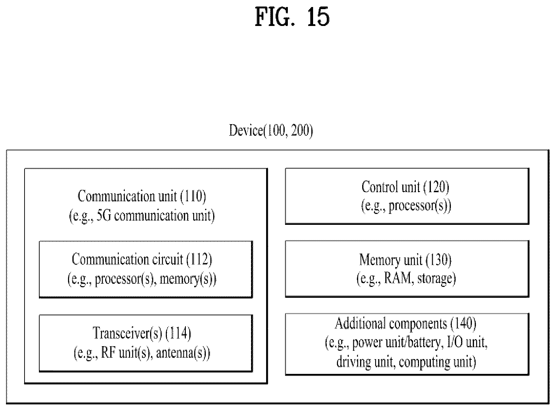

FIG. 15 illustrates another example of a wireless device applied to the present disclosure.

Referring to FIG. 15, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. In another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

## INDUSTRIAL APPLICABILITY

The above-described embodiments of the present disclosure may be applied to various mobile communication systems.

## Claims

1. A method of performing communication by a device having a control link and a backhaul link formed with a base station (BS) in a wireless communication system, the method comprising:

   receiving information on a first operation duration for the backhaul link;
   configuring a first beam of the backhaul link for the first operation duration; and
   receiving a downlink signal to be forwarded to a user equipment (UE) from the BS based on the first beam of the backhaul link,
   wherein based on that a second operation duration for receiving the downlink signal through the control link overlaps with the first operation duration on at least one time resource, the first beam of the backhaul link is configured to a same beam as a second beam of the control link for the at least one time resource,
   wherein the second operation duration comprises a first time resource allocated through downlink control information and a second time resource configured to monitor the downlink signal.

2. The method of claim 1, wherein the second time resource comprises time resources configured to monitor at least one of a synchronization signal block (SSB), system information block1 (SIB1), a channel state information reference signal (CSI-RS), and a physical downlink control channel (PDCCH), which are related to the control link.

3. The method of claim 1, further comprising receiving indication information indicating a beam for the backhaul link.

4. The method of claim 3, wherein even based on reception of the indication information, the first beam of the backhaul link is configured to the same beam as the second beam for the at least one time resource.

5. The method of claim 3, wherein the first beam of the backhaul link is configured to a beam indicated by the indication information for remaining time resources except for the at least one time resource among time resources included in the first operation duration.

6. The method of claim 5, wherein the first beam of the backhaul link is configured to a beam indicated by the indication information only for time resources earlier than the at least one time resource among the remaining time resources.

7. The method of claim 1, wherein based on that indication information indicating a beam for the backhaul link is not received, the first beam of the backhaul link is configured to a beam determined based on a predefined rule for remaining time resources except for the at least one time resource among time resources included in the first operation duration.

8. The method of claim 7, wherein the first beam of the backhaul link is configured to a beam corresponding to a control resource set (CORESET) with a lowest index among CORESETs related to the control link, based on the predefined rule.

9. The method of claim 1, further comprising forwarding the downlink signal to the UE through an access link formed with the UE.

10. The method of claim 1, wherein the device is a network-controlled repeater (NCR).

11. A non-transitory computer-readable storage medium having recorded thereon instructions for executing the method of Claim 1.

12. A device configured to perform communication based on a control link and a backhaul link formed with a base station (BS) in a wireless communication system, the device comprising:

a radio frequency (RF) transceiver; and
a processor connected to the RF transceiver,
wherein the processor is configured to:

control the RF transceiver to receive information on a first operation duration for downlink reception through the backhaul link;
configure a first beam of the backhaul link for the first operation duration; and
receive a downlink signal to be forwarded to a user equipment (UE) from the BS based on the first beam of the backhaul link,
wherein based on that a second operation duration for receiving the downlink signal through the control link overlaps with the first operation duration on at least one time resource, the first beam of the backhaul link is configured to a same beam as a second beam of the control link for the at least one time resource,
wherein the second operation duration comprises a first time resource allocated through downlink control information and a second time resource configured to monitor the downlink signal.

13. A processing device configured to control a device having a control link and a backhaul link formed with a base station (BS) in a wireless communication system, the processing device comprising:

at least one processor; and
at least one memory connected to the at least one processor and storing instructions that, based on execution by the at least one processor, cause a user equipment (UE) to:

receive information on a first operation duration for downlink reception through the backhaul link;
configure a first beam of the backhaul link for the first operation duration; and
receive a downlink signal to be forwarded to a UE from the BS based on the first beam of the backhaul link,
wherein based on that a second operation duration for receiving the downlink signal through the control link overlaps with the first operation duration on at least one time resource, the first beam of the backhaul link is configured to a same beam as a second beam of the control link for the at least one time resource,

wherein the second operation duration comprises a first time resource allocated through downlink control information and a second time resource configured to monitor the downlink signal.

14. A method of performing communication by a base station (BS) having a control link and a backhaul link formed with a device in a wireless communication system, the method comprising:

transmitting information on a first operation duration for downlink reception through the backhaul link;
determining a third beam for transmitting a downlink signal through the backhaul link; and
transmitting the downlink signal to be forwarded to a user equipment (UE) to the device based on the third beam of the backhaul link during the first operation duration,
wherein based on that a second operation duration for receiving the downlink signal through the control link overlaps with the first operation duration on at least one time resource, the third beam of the backhaul link is determined to be a same beam as a transmission beam of the control link for the at least one time resource, and
wherein the second operation duration comprises a first time resource allocated through downlink control information and a second time resource configured to monitor the downlink signal.

15. A base station (BS) configured to perform communication based on a control link and a backhaul link formed with a device in a wireless communication system, the device comprising:

a radio frequency (RF) transceiver; and
a processor connected to the RF transceiver,
wherein the processor is configured to:

control the RF transceiver
transmit information on a first operation duration for downlink reception through the backhaul link;
determine a third beam for transmitting a downlink signal through the backhaul link; and
transmit the downlink signal to be forwarded to a user equipment (UE) to the device based on the third beam of the backhaul link during the first operation duration,
wherein based on that a second operation duration for receiving the downlink signal through the control link overlaps with the first operation duration on at least one time resource, the third beam of the backhaul link is determined to be a same beam as a transmission beam of the control link for the at least one time resource, and
wherein the second operation duration comprises a first time resource allocated through downlink control information and a second time resource configured to monitor the downlink signal.

# FIG. 1

EP 4 604 415 A1

FIG. 2

# FIG. 3

| One Frame (10ms) |
|---|

| Half-Frame (5ms) | Half-Frame (5ms) |
|---|---|

| Subframe 0 (1ms) | ... | Subframe 4 (1ms) | Subframe 5 (1ms) | ... | Subframe 9 (1ms) |
|---|---|---|---|---|---|

Subframe (1ms)

**15KHz**

| Slot 0 (14symbols) |
|---|

1ms

**30KHz**

| Slot 0 (14symbols) | Slot 1 |
|---|---|

500us

**60KHz**

| Slot 0 (14symbols) | Slot 1 | Slot 2 | Slot 3 |
|---|---|---|---|

250us

**120KHz**

| Slot 0 (14symbols) | Slot 1 | Slot 2 | Slot 3 | Slot 4 | Slot 5 | Slot 6 | Slot 7 |
|---|---|---|---|---|---|---|---|

125us

# FIG. 4

# FIG. 5

| | | Long PUSCH | | |
|---|---|---|---|---|
| PDCCH | Gap | PDSCH/PUSCH | | Short PUCCH |
| | | | Long PUCCH | |

One slot

f
t

# FIG. 6

| UE | | BS |
|---|---|---|

CORESET configuration — S502

SS configuration — S504

PDCCH generation — S506

PDCCH candidate
monitoring in the — S508
configured SS

## FIG. 7

Parent node — DU

Parent link

IAB node — MT / DU

Child link

Child node — MT / DU

## FIG. 8

Network-controlled repeater(NCR)

Control link

NCR-MT(Mobile terminal)

Internal interface

Forwarding link for backhaul(FLB)

NCR-RU(Radio Unit)

gNB

Forwarding link for sevice(FLS)

UE

# FIG. 9

(a)

(b)

EP 4 604 415 A1

# FIG. 10

For DL, beam applied to CORESET 0 (e.g., beam index "a" for DL)

For UL, beam applied to PUCCH resource 0 (e.g., beam index "p" for UL)

| Non-simultaneous operation | Simultaneous operation | Non-simultaneous operation |

Time

Application of beam applied to NCR-MT

DL/UL beam indication through MAC-CE

(e.g., beam index "b" for DL and beam index "q" for UL)

Case 1) It is considered that DL/UL beam indication is provided (beam index "b" for DL and beam index "q" for UL).

Case 2) It is considered that DL/UL beam indication is not provided (beam index "a" for DL and beam index "p" for UL).

EP 4 604 415 A1

## FIG. 11

S111

Receive configuration information on first operation duration related to backhaul link through control link

S113

Configure first beam for backhaul link during first operation duration

S115

Receive DL signal through backhaul link based on first beam of backhaul link

## FIG. 12

S121

Transmit configuration information on first operation duration related to backhaul link through control link

S123

Configure third beam for backhaul link during first operation duration

S125

Transmit DL signal through backhaul link based on third beam of backhaul link

# FIG. 13

# FIG. 14

# FIG. 15

Device(100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

## INTERNATIONAL SEARCH REPORT

| International application No. |
| --- |
| **PCT/KR2023/015756** |

| | |
| --- | --- |
| **A.** | **CLASSIFICATION OF SUBJECT MATTER** |

**H04B 7/155**(2006.01)i; **H04B 7/06**(2006.01)i; **H04B 7/08**(2006.01)i; **H04W 72/231**(2023.01)i; **H04W 72/232**(2023.01)i; **H04W 72/04**(2009.01)i; **H04W 72/0457**(2023.01)i; **H04W 84/04**(2009.01)i

According to International Patent Classification (IPC) or to both national classification and IPC

| | |
| --- | --- |
| **B.** | **FIELDS SEARCHED** |

Minimum documentation searched (classification system followed by classification symbols)

H04B 7/155(2006.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NCR(network controlled repeater), 제어 링크(control link), 백홀 링크(backhaul link), 빔(beam), 동작 구간(operating period), 중첩(overlap), 시간 자원(time resource)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X<br>Y | KDDI. Discussion on side control information and NCR behavior. R1-2210068, 3GPP TSG RAN WG1 #110bis-e, E-Meeting. 30 September 2022.<br>See sections 2.1 and 2.2.2-2.3. | 1-5,7-15<br>6 |
| Y | CATT. Discussion on side control information and NCR behavior. R1-2208989, 3GPP TSG RAN WG1 #110bis-e, E-Meeting. 30 September 2022.<br>See section 2.1.2; and figure 5. | 6 |
| A | LG ELECTRONICS. Discussion on side control information and NCR behavior. R1-2209811, 3GPP TSG RAN WG1 #110bis-e, E-Meeting. 30 September 2022.<br>See section 2. | 1-15 |
| A | SAMSUNG. Discussion on side control information and NCR behavior. R1-2209744, 3GPP TSG RAN WG1 #110bis-e, E-Meeting. 30 September 2022.<br>See section 2.1.1. | 1-15 |

☑ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 January 2024** | **24 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/015756** |

## C. DOCUMENTS CONSIDERED TO BE RELEVANT

| Category* | Citation of document, with indication, where appropriate, of the relevant passages | Relevant to claim No. |
| --- | --- | --- |
| A | US 2022-0183043 A1 (QUALCOMM INCORPORATED) 09 June 2022 (2022-06-09)<br>See paragraphs [0117]-[0167]; and figures 12-17. | 1-15 |

Form PCT/ISA/210 (second sheet) (July 2022)

## INTERNATIONAL SEARCH REPORT
### Information on patent family members

| Patent document cited in search report | Publication date (day/month/year) | Patent family member(s) | | | Publication date (day/month/year) |
|---|---|---|---|---|---|
| US 2022-0183043 A1 | 09 June 2022 | CN | 116636157 | A | 22 August 2023 |
| | | EP | 4256725 | A1 | 11 October 2023 |
| | | WO | 2022-120386 | A1 | 09 June 2022 |

Form PCT/ISA/210 (patent family annex) (July 2022)